# EUROPÄISCHE PATENTSCHRIFT

(11) **EP 3 099 768 B1**
(45) Veröffentlichungstag und Bekanntmachung des Hinweises auf die Patenterteilung: **21.08.2019**
(21) Anmeldenummer: 15703029.7
(22) Anmeldetag: 29.01.2015
(51) Int. Cl.: C10M 145/12, C10M 145/16, C10L 1/14, C10L 1/16, C10L 1/196, C10L 10/04, C10M 159/00, C10M 171/00, C10L 1/197, C10L 1/236, C10L 10/18, C10L 10/06

(54) **KORROSIONSINHIBITOREN FÜR KRAFTSTOFFE**
CORROSION INHIBITORS FOR FUELS
INHIBITEURS DE CORROSION POUR CARBURANTS

(30) Priorität: 29.01.2014 EP 14152991; 04.12.2014 WO PCT/EP2014/076622; 16.12.2014 EP 14198266
(43) Veröffentlichungstag der Anmeldung: 07.12.2016
(73) Patentinhaber: BASF SE, 67056 Ludwigshafen am Rhein (DE)
(72) Erfinder: MEZGER, Jochen, 67308 Lautersheim (DE); PERETOLCHIN, Maxim, 67466 Lambrecht (DE); FLORES-FIGUEROA, Aaron, 68161 Mannheim (DE); HANSCH, Markus, 67346 Speyer (DE); Garcia Castro, Ivette, 67067 Ludwigshafen (DE); Muehlbach, Klaus, 67269 Gruenstadt (DE)
(74) Vertreter: BASF IP Association
(86) Internationale Anmeldenummer: PCT/EP2015/051752
(87) Internationale Veröffentlichungsnummer: WO 2015/114029

(56) Entgegenhaltungen:
- EP-A1- 0 299 120
- EP-A1- 0 307 815
- WO-A2-2013/101256
- JP-A- S5 585 679
- US-A- 3 382 056
- US-A- 5 080 686

## Beschreibung

Die vorliegende Erfindung betrifft neue Verwendungen von Korrosionsinhibitoren in Diesel- oder Ottokraftstoffen.

Korrosionsinhibitoren sind gängige Additive in Kraft- und Schmierstoffen, die oftmals auf säuregruppenhaltigen Strukturen beruhen, z.B. Dimerfettsäuren.

Nachteilig an diesen Korrosionsinhibitoren ist, daß sie insbesondere in Gegenwart von CalciumIonen zu Ausfällungen neigen und dadurch ihre korrosionsinhibierende Wirkung vermindert wird. Die durch diese Ausfällungen gebildeten Ablagerungen können darüber hinaus die Funktionsweise von Motoren, Motorbestandteilen oder Teilen des Kraftstoffsystems, insbesondere dem Einspritzsystem, speziell den Einspritzpumpen oder-düsen, beeinträchtigen.

Unter dem "Einspritzsystem" wird dabei der Teil des Kraftstoffsystems in Kraftfahrzeugen von Kraftstoffpumpe bis einschließlich Injektorauslass verstanden. Als "Kraftstoffsystem" werden dabei die Bauteile von Kraftfahrzeugen verstanden, die mit dem jeweiligen Kraftstoff in Kontakt stehen, bevorzugt der Bereich von Tank bis einschließlich Injektorauslass.

Es stelle eine Ausführungsform der vorliegenden Erfindung dar, daß die erfindungsgemäßen Verbindungen gegen Ablagerungen nicht nur im Einspritzsystem wirken, sondern auch im übrigen Kraftstoffsystem, hier insbesondere gegen Ablagerungen in Kraftstofffiltern und -pumpen.

Es bestand daher die Aufgabe, Korrosionsinhibitoren zur Verfügung zu stellen, die eine erhöhte Verträglichkeit gegen Calcium-Ionen zeigen und dabei ihre Wirkung als Korrosionsinhibitor behalten.

Die Aufgabe wird gelöst durch die anspruchsgemäße Verwendung.

US 3382056 lehrt die Verwendung von niedrigmolekularen Copolymeren enthaltend Olefine und Bernsteinsäure und deren Derivate in einpolymeriserter Form als Antirostadditive in raffinierten Kraftstoffzusammensetzungen.

JP 55-085679 lehrt die Verwendung von hydrolytisch geöffneten Copolymeren des Molgewichts Mw von 2000 bis 30000 aus α-Olefinen mit 20 bis 60 Kohlenstoffatomen und Maleinsäureanhydrid als öllösliche Rostinhibitoren in Mineralöl oder Schmierstoffen.

Aus US 5080686 und EP 299120 ist bekannt, daß Alkyl- und Alkenybernsteinsäuren und deren Derivate sowie Copolymere enthaltend Olefine und Bernsteinsäure und deren Derivate in einpolymeriserter Form als Korrosionsinhibitoren in oxygenierten Kraftstoffsystemen fungieren.

Aus keiner dieser Schriften geht hervor, daß die erfindungsgemäßen Korrosionsinhibitoren eine erhöhte Verträglichkeit gegen Calcium-Ionen aufweisen.

EP 307815 beschreibt Kraftstoffe, enthaltend Copolymere u.a. aus Olefinen mit 2 bis 40 C-Atomen und/oder Cycloolefinen mit 3 bis 10 C-Atomen mit Maleinsäureanhydrid, wobei die Carboxylgruppen der Copolymeren ganz oder teilweise mit Alkali- oder Erdalkali unter Bildung der Alkalimetall- oder Erdalkalimetallsalze umgesetzt sind und der Rest der Carboxylgruppen zu Ester- und/oder Amidgruppen umgesetzt ist.

Nachteilig ist, daß die Copolymere gemäß der EP 307815 als Alkalimetall- oder Erdalkalimetallsalze vorliegen und somit weitere Metalle in den Kraftstoff einschleppen.

Demgemäß ist Gegenstand der Erfindung die Verwendung von Copolymeren, erhältlich durch
- in einem ersten Reaktionsschritt (I) Copolymerisation von
   (A) mindestens einer ethylenisch ungesättigten Mono- oder Dicarbonsäure oder deren Derivate, ausgewählt aus der Gruppe bestehend aus
      - Anhydriden in monomerer oder polymerer Form,
      - Mono- oder Dialkylestern, sowie
      - gemischten Estern,
   (B) mindestens einem α-Olefin mit von mindestens 16 bis zu einschließlich 26 Kohlenstoffatomen,
   (C) optional mindestens einem weiteren, mindestens 4 Kohlenstoffatome aufweisenden, aliphatischen oder cycloaliphatischen Olefin, das ein anderes als (B) ist und
   (D) optional eines oder mehrerer weiterer copolymerisierbarer Monomere, die verschieden von den Monomeren (A), (B) und (C) sind, ausgewählt aus der Gruppe bestehend aus
      (Da) Vinylestern,
      (Db) Vinylethern,
      (Dc) (Meth)acrylsäureestern von Alkoholen, die mindestens 5 Kohlenstoffatome aufweisen,
      (Dd) Allylalkoholen oder deren Ether,
      (De) N-Vinylverbindungen, ausgewählt aus der Gruppe bestehend aus Vinylverbindungen von mindestens ein Stickstoffatom enthaltenden Heterocyclen, N-Vinylamide oder N-Vinyllactame,
      (Df) ethylenisch ungesättigte Aromaten
      (Dg) α,β-ethylenisch ungesättigte Nitrilen,
      (Dh) (Meth)acrylsäureamiden und
      (Di) Allylaminen,
   gefolgt von
- in einem zweiten optionalen Reaktionsschritt (II) teilweise oder vollständige Hydrolyse von im aus (I) erhaltenen Copolymer enthaltenen Anhydrid- oder Carbonsäureesterfunktionalitäten unter Erhalt eines Copolymeren mit einem gewichtsmittleren Molekulargewicht Mw (be-stimmt durch Gelpermeationschromatographie mit Tetrahydrofuran und Polystyrol als Standard) von 1,5 bis 4 kDa, wobei der zweite Reaktionsschritt zumindest dann durchlaufen wird, wenn das aus Reaktionsschritt (I) erhaltene Copolymer keine freien Carbonsäurefunktionalitäten enthält,
als Korrosionsinhibitoren Diesel- oder Ottokraftstoffen, die einen Gehalt an Alkali- und/oder Erdalkalimetallen und/oder Zink von mindestens 0,1 Gew.ppm aufweisen.

Die beschriebenen Copolymere zeigen einen besonderen Vorteil Diesel- oder Ottokraftstoffen, die einen Gehalt an Alkali- und/oder Erdalkalimetallen und/oder Zink von mindestens 0,1 Gew.ppm aufweisen, besonders bevorzugt mindestens 0,2 Gew.ppm und ganz besonders bevorzugt mindestens 0,3 Gew.ppm und insbesondere mindestens 0,5 Gew.ppm. Denkbar ist auch ein Gehalt an Alkali- und/oder Erdalkalimetallen und/oder Zink von mindestens 1 Gew.ppm, bevorzugt mindestens 2 und besonders bevorzugt mindestens 3 Gew.ppm.

Es stellt einen Vorteil der beschriebenen Copolymere dar, daß sie ihre korrosionsinhibierende Wirkung auch in Gegenwart von Alkali- und/oder Erdalkalimetallen und/oder Zink zeigen, bevorzugt auch in Gegenwart von Erdalkalimetallen. Der Gehalt an Alkali- und/oder Erdalkalimetallen in Kraftstoffen rührt beispielsweise her durch Vermischung mit Alkali- und/oder Erdalkalimetallen-haltigen Schmierstoffen, beispielsweise in der Kraftstoffpumpe. Ferner können Alkali- und/oder Erdalkalimetalle aus nicht oder unzureichend entsalzten Kraftstoffadditiven stammen, beispielsweise Trägerölen. Durch das Einschleppen von Alkali- und/oder Erdalkalimetallen in die Kraftstoffe können die oben genannten Nachteile hervorgerufen werden. Eine Quelle für Zink sind beispielsweise anti-wear Additive.

Als Alkalimetalle zu nennen sind besonders Natrium und Kalium, insbesondere Natrium.

Als Erdalkalimetalle zu nennen sind besonders Magnesium und Calcium, insbesondere Calcium.

### Ferner ist Zink hervorzuheben

Mit besonderem Vorteil sind die beschriebenen Copolymere auch in Gegenwart von Calcium noch aktiv und zeigen keine Ausfällungen.

Die angegebenen Mengen an Alkali- und/oder Erdalkalimetallen und/oder Zink beziehen sich dabei jeweils auf einzelne Metallespezies.

### Beschreibung des Copolymers

Bei dem Monomer (A) handelt es sich um mindestens eine, bevorzugt ein bis drei, besonders bevorzugt ein oder zwei und ganz besonders bevorzugt genau eine ethylenisch ungesättigte, bevorzugt α,β-ethylenisch ungesättigte Mono- oder Dicarbonsäure oder deren Derivate, bevorzugt einer Dicarbonsäure oder deren Derivate.

Unter Derivaten werden dabei verstanden
- die betreffenden Anhydride in monomerer oder auch polymerer Form,
- Mono- oder Dialkylester, bevorzugt Mono- oder Di-C₁-C₄-alkylester, besonders bevorzugt Mo-no- oder Dimethylester oder die entsprechenden Mono- oder Diethylester, sowie
- gemischte Ester, bevorzugt gemischte Ester mit unterschiedlichen C₁-C₄-Alkylkomponenten, besonders bevorzugt gemischte Methylethylester.

Bevorzugt handelt es sich bei den Derivaten um Anhydride in monomerer Form oder Di-C₁-C₄-alkylester, besonders bevorzugt um Anhydride in monomerer Form.

Unter C₁-C₄-Alkyl wird im Rahmen dieser Schrift Methyl, Ethyl, *iso*-Propyl, n-Propyl, n-Butyl, *iso*Butyl, *sek*-Butyl und *tert*-Butyl verstanden, bevorzugt Methyl und Ethyl, besonders bevorzugt Methyl.

Bei der α,β-ethylenisch ungesättigten Mono- oder Dicarbonsäure handelt es sich um solche Mono- oder Dicarbonsäuren bzw. deren Derivate, bei denen die Carboxylgruppe oder im Fall von Dicarbonsäuren mindestens eine Carboxylgruppe, bevorzugt beide Carboxylgruppen mit der ethylenisch ungesättigten Doppelbindung konjugiert sind.

Beispiele für ethylenisch ungesättigte Mono- oder Dicarbonsäure, die nicht α,β-ethylenisch ungesättigt sind, sind cis-5-Norbornen-endo-2,3-dicarbonsäureanhydrid, exo-3,6-Epoxy-1,2,3,6-tetrahydrophthalsäureanhydrid und cis-4-Cyclohexen-1,2-dicarbonsäure anhydrid.

Beispiele für α,β-ethylenisch ungesättigten Monocarbonsäuren sind Acrylsäure, Methacrylsäure, Crotonsäure und Ethylacrylsäure, bevorzugt Acrylsäure und Methacrylsäure, in dieser Schrift kurz als (Meth)acrylsäure bezeichnet, und besonders bevorzugt Acrylsäure.

Besonders bevorzugte Derivate von α,β-ethylenisch ungesättigten Monocarbonsäuren sind Acrylsäuremethylester, Acrylsäureethylester, Acrylsäure-n-butylester und Methacrylsäuremethylester.

Beispiele für Dicarbonsäuren sind Maleinsäure, Fumarsäure, Itaconsäure (2-Methylenbutandisäure), Citraconsäure (2-Methylmaleinsäure), Glutaconsäure (Pent-2-en-1,5-dicarbonsäure), 2,3-Dimethylmaleinsäure, 2-Methylfumarsäure, 2,3-Dimethylfumarsäure, Methylenmalonsäure und Tetrahydrophthalsäure, bevorzugt um Maleinsäure und Fumarsäure und besonders bevorzugt um Maleinsäure und deren Derivate.

Insbesondere handelt es sich bei dem Monomer (A) um Maleinsäureanhydrid.

Bei dem Monomer (B) handelt es sich um mindestens ein, bevorzugt ein bis vier, besonders bevorzugt ein bis drei, ganz besonders bevorzugt ein oder zwei und insbesondere genau ein α-Olefin mit von mindestens 16 und ganz besonders bevorzugt mindestens 18 Kohlenstoffatome auf. Weiterhin weisen die α-Olefine (B) bis einschließlich 26 und ganz besonders bevorzugt bis einschließlich 24 Kohlenstoffatome auf.

Bevorzugt kann es sich bei den α-Olefinen um lineare oder verzweigte, bevorzugt lineare 1-Alkene handeln.
Beispiele dafür sind 1-Dodecen, 1-Tridecen, 1-Tetradecen, 1-Pentadecen, 1-Hexadecen, 1-Heptadecen, 1- Octadecen, 1-Nonodecen, 1-Eicosen, 1-Docosen, 1-Tetracosen, 1-Hexacosen, wovon 1- Octadecen, 1-Eicosen, 1-Docosen und 1-Tetracosen, sowie deren Gemische bevorzugt werden.

Weitere Beispiele für α-Olefin (B) sind solche Olefine, bei denen es sich um Oligomere oder Polymere von C₂- bis C₁₂-Olefinen handelt, bevorzugt von C₃- bis C₁₀-Olefinen, besonders bevorzugt von C₄- bis C₆-Olefinen. Beispiele dafür sind Ethen, Propen, 1-Buten, 2-Buten, iso-Buten, Penten-Isomere sowie Hexen-Isomere, bevorzugt sind Ethen, Propen, 1-Buten, 2-Buten und iso-Buten.

Namentlich als α-Olefine (B) genannt seien Oligomere und Polymere von Propen, 1-Buten, 2-Buten, iso-Buten, sowie deren Mischungen, besonders Oligomere und Polymere von Propen oder iso-Buten oder von Mischungen aus 1-Buten und 2-Buten. Unter den Oligomeren sind die Trimere, Tetramere, Pentamere und Hexamere sowie deren Gemische bevorzugt.

Zusätzlich zu dem Olefin (B) kann optional mindestens ein, bevorzugt ein bis vier, besonders bevorzugt ein bis drei, ganz besonders bevorzugt ein oder zwei und insbesondere genau ein weiteres, mindestens 4 Kohlenstoffatome aufweisendes, aliphatisches oder cycloaliphatisches Olefin (C), das ein anderes als (B) ist, in das erfindungsgemäße Copolymer einpolymerisiert werden.

Bei den Olefinen (C) kann es sich um Olefine mit endständiger (α-) Doppelbindung handeln oder solche mit nicht-endständiger Doppelbindung, bevorzugt mit α-Doppelbindung. Bevorzugt handelt es sich bei dem Olefin (C) um Olefine mit 4 bis weniger als 12 oder mehr als 30 Kohlenstoffatomen. Sofern es sich bei dem Olefin (C) um ein Olefin mit 12 bis 30 Kohlenstoffatomen handelt, so weist dieses Olefin (C) keine α-ständige Doppelbindung auf.

Beispiele für aliphatische Olefine (C) sind 1-Buten, 2-Buten, iso-Buten, Penten-Isomere, Hexen-Isomere, Hepten-Isomere, Octen-Isomere, Nonen-Isomere, Decen-Isomere, Undecen-Isomere sowie deren Gemische.

Beispiele für cycloaliphatische Olefine (C) sind Cyclopenten, Cyclohexen, Cycloocten, Cyclodecen, Cyclododecen, α- oder β-Pinen und deren Gemische, Limonen und Norbornen.

Weitere Beispiele für Olefine (C) sind mehr als 30 Kohlenstoffatome aufweisende Polymere von Propen, 1-Buten, 2-Buten oder iso-Buten oder solche enthaltende Olefingemische, bevorzugt von iso-Buten oder solches enthaltende Olefingemische, besonders bevorzugt mit einem gewichtsmittleren Molekulargewicht M_{w} im Bereich von 500 bis 5000 g/mol, bevorzugt 650 bis 3000, besonders bevorzugt 800 bis 1500 g/mol.

Bevorzugt weisen die iso-Buten in einpolymerisierter Form enthaltenden Oligomere oder Polymere einen hohen Gehalt an terminal angeordneten ethylenischen Doppelbindungen (α-Doppelbindungen) auf, beispielsweise wenigstens 50 Mol-%, bevorzugt wenigstens 60 Mol-%, besonders bevorzugt wenigstens 70 Mol-% und ganz besonders bevorzugt wenigstens 80 Mol-%.

Für die Herstellung solcher iso-Buten in einpolymerisierter Form enthaltender Oligomere oder Polymere eignen sich als Isobuten-Quelle sowohl Rein-Isobuten als auch Isobuten-haltige C4-Kohlenwasserstoffströme, beispielsweise C4-Raffinate, insbesondere "Raffinat 1", C4-Schnitte aus der Isobutan-Dehydrierung, C4-Schnitte aus Steamcrackern und aus FCC-Crackern (fluid catalysed cracking), sofern sie weitgehend von darin enthaltenem 1,3-Butadien befreit sind. Ein C4-Kohlenwasserstoffstrom aus einer FCC-Raffinerieeinheit ist auch als "b/b"-Strom bekannt. Weitere geeignete Isobuten-haltige C4-Kohlenwasserstoffströme sind beispielsweise der Produktstrom einer Propylen-Isobutan-Cooxidation oder der Produktstrom aus einer Metathese-Einheit, welche in der Regel nach üblicher Aufreinigung und/oder Aufkonzentrierung eingesetzt werden. Geeignete C4-Kohlenwasserstoffströme enthalten in der Regel weniger als 500 ppm, vorzugsweise weniger als 200 ppm, Butadien. Die Anwesenheit von 1-Buten sowie von cis- und trans-2-Buten ist weitgehend unkritisch. Typischerweise liegt die Isobutenkonzentration in den genannten C4-Kohlenwasserstoffströmen im Bereich von 40 bis 60 Gew.-%. So besteht Raffinat 1 in der Regel im wesentlichen aus 30 bis 50 Gew.-% Isobuten, 10 bis 50 Gew.-% 1-Buten, 10 bis 40 Gew.-% cis- und trans-2-Buten sowie 2 bis 35 Gew.-% Butanen; beim erfindungsgemäßen Polymerisationsverfahren verhalten sich die unverzeigten Butene im Raffinat 1 in der Regel praktisch inert und nur das Isobuten wird polymerisiert.

In einer bevorzugten Ausführungsform setzt man als Monomerquelle für die Polymerisation einen technischen C4-Kohlenwasserstoffstrom mit einem Isobuten-Gehalt von 1 bis 100 Gew.-%, insbesondere von 1 bis 99 Gew.-%, vor allem von 1 bis 90 Gew.-%, besonders bevorzugt von 30 bis 60 Gew.-%, insbesondere einen Raffinat 1-Strom, einen b/b-Strom aus einer FCC-Raffinerieeinheit, einen Produktstrom einer Propylen-Isobutan-Cooxidation oder einen Produktstrom aus einer Metathese-Einheit ein.

Insbesondere bei Verwendung eines Raffinat 1-Stromes als Isobutenquelle hat sich die Verwendung von Wasser als alleinigem oder als weiterem Initiator bewährt, vor allem wenn man bei Temperaturen von -20°C bis +30°C, insbesondere von 0°C bis +20°C, polymerisiert. Bei Temperaturen von -20°C bis +30°C, insbesondere von 0°C bis +20°C, kann man bei Verwendung eines Raffinat 1-Stromes als Isobutenquelle jedoch auch auf den Einsatz eines Initiators verzichten.

Das genannte Isobuten-haltige Monomerengemisch kann geringe Mengen an Kontaminanten wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien wie Aktivkohle, Molekularsiebe oder Ionenaustauscher, aus dem Isobuten-haltigen Monomerengemisch entfernt.

Es können, wenn auch weniger bevorzugt, auch Monomermischungen von Isobuten beziehungsweise des Isobuten-haltigen Kohlenwasserstoffgemischs mit olefinisch ungesättigten Monomeren, welche mit Isobuten copolymerisierbar sind, umgesetzt werden. Sofern Monomermischungen des Isobutens mit geeigneten Comonomeren copolymerisiert werden sollen, enthält die Monomermischung vorzugsweise wenigstens 5 Gew.-%, besonders bevorzugt wenigstens 10 Gew.-% und insbesondere wenigstens 20 Gew.-% Isobuten, und vorzugsweise höchstens 95 Gew.-%, besonders bevorzugt höchstens 90 Gew.-% und insbesondere höchstens 80 Gew.-% Comonomere.

In einer bevorzugten Ausführungsform weist das Stoffgemisch der Olefine (B) und optional (C) gemittelt auf ihre Stoffmengen mindestens 12 Kohlenstoffatome auf, bevorzugt mindestens 14, besonders bevorzugt mindestens 16 und ganz besonders bevorzugt mindestens 17 Kohlenstoffatome auf.

So weist beispielsweise ein 2:3-Gemisch aus Docosen und Tetradecen einen gemittelten Wert für die Kohlenstoffatome von 0,4 x 22 + 0,6 x 14 = 17,2 auf.

Die Obergrenze ist weniger relevant und beträgt in der Regel nicht mehr als 60 Kohlenstoffatome, bevorzugt nicht mehr als 55, besonders bevorzugt nicht mehr als 50, ganz besonders bevorzugt nicht mehr als 45 und insbesondere nicht mehr als 40 Kohlenstoffatome.

Das optionale Monomer (D) ist mindestens ein Monomer, bevorzugt ein bis drei, besonders bevorzugt ein oder zwei und ganz besonders bevorzugt genau ein Monomer ausgewählt aus der Gruppe bestehend aus
(Da) Vinylestern,
(Db) Vinylethern,
(Dc) (Meth)acrylsäureestern von Alkoholen, die mindestens 5 Kohlenstoffatome aufweisen,
(Dd) Allylalkoholen oder deren Ether,
(De) N-Vinylverbindungen, ausgewählt aus der Gruppe bestehend aus Vinylverbindungen von mindestens ein Stickstoffatom enthaltenden Heterocyclen, N-Vinylamide oder N-Vinyllactame,
(Df) ethylenisch ungesättigte Aromaten und
(Dg) α,β-ethylenisch ungesättigte Nitrilen
(Dh) (Meth)acrylsäureamiden und
(Di) Allylaminen.

Beispiele für Vinylester (Da) sind Vinylester von C₂- bis C₁₂-Carbonsäuren, bevorzugt Vinylacetat, Vinylpropionat, Vinylbutyrat, Vinylpentanoat, Vinylhexanoat, Vinyloctanoat, Vinyl-2-ethylhexanoat, Vinyldecanoat, sowie Vinylester der Versatic-Säuren 5 bis 10, bevorzugt Vinylester von 2,2-Dimethylpropionsäure (Pivalinsäure, Versatic-Säure 5), 2,2-Dimethylbuttersäure (Neohexansäure, Versatic-Säure 6), 2,2-Dimethylpentansäure (Neoheptansäure, Versatic-Säure 7), 2,2-Dimethylhexansäure (Neooctansäure, Versatic-Säure 8), 2,2-Dimethylheptansäure (Neononansäure, Versatic-Säure 9) oder 2,2-Dimethyloctansäure (Neodecansäure, Versatic-Säure 10).

Beispiele für Vinylether (Db) sind Vinylether von C₁- bis C₁₂-Alkanolen, bevorzugt Vinylether von Methanol, Ethanol, *iso*-Propanol, n-Propanol, n-Butanol, *iso*-Butanol, *sek*-Butanol, *tert*-Butanol, n-Hexanol, n-Heptanol, n-Octanol, n-Decanol, n-Dodecanol (Laurylalkohol) oder 2-Ethylhexanol.

Bevorzugte (Meth)acrylsäureester (Dc) sind (Meth)acrylsäureester von C₅- bis C₁₂-Alkanolen, bevorzugt von n-Pentanol, n-Hexanol, n-Heptanol, n-Octanol, n-Decanol, n-Dodecanol (Laurylalkohol), 2-Ethylhexanol oder 2-Propylheptanol. Besonders bevorzugt sind Acrylsäurepentylester, Acrylsäure-2-ethylhexylester, Acrylsäure-2-propylheptylester.

Beispiele für Monomere (Dd) sind Allylalkohole und Allylether von C₂- bis C₁₂-Alkanolen, bevorzugt Allylether von Methanol, Ethanol, *iso*-Propanol, n-Propanol, n-Butanol, *iso*-Butanol, *sek-*Butanol, *tert-Butanol,* n-Hexanol, n-Heptanol, n-Octanol, n-Decanol, n-Dodecanol (Laurylalkohol) oder 2-Ethylhexanol.

Beispiele für Vinylverbindungen (De) von mindestens ein Stickstoffatom enthaltenden Heterocyclen sind N-Vinylpyridin, N-Vinylimidazol und N-Vinylmorpholin.

### Bevorzugte Verbindungen (De) sind N-Vinylamide oder N-Vinyllactame:

Beispiele für N-Vinylamide oder N-Vinyllactame (De) sind N-Vinylformamid, N-Vinylacetamid, N-Vinylpyrrolidon und N-Vinylcaprolactam.

Beispiele für ethylenisch ungesättigte Aromaten (Df) sind Styrol und α-Methylstyrol.

Beispiele für α,β-ethylenisch ungesättigte Nitrile (Dg) sind Acrylnitril und Methacrylnitril.

Beispiele für (Meth)acrylsäureamide (Dh) sind Acrylamid und Methacrylamid.

Beispiele für Allylamine (Di) sind Allylamin, Dialkylallylamin und Trialkyl allylammonium halogenide.

Bevorzugte Monomere (D) sind (Da), (Db), (Dc), (De) und/oder (Df), besonders bevorzugt (Da), (Db) und/oder (Dc), ganz besonders bevorzugt (Da) und/oder (Dc) und insbesondere (Dc).

Das Einbauverhältnis der Monomere (A) und (B) sowie optional (C) sowie optional (D) im aus dem Reaktionsschritt (I) erhaltenen Polymer ist in der Regel wie folgt:
Das molare Verhältnis von (A) / ((B) und (C)) (in Summe) beträgt in der Regel von 10:1 bis 1:10, bevorzugt 8:1 bis 1:8, besonders bevorzugt 5:1 bis 1:5, ganz besonders bevorzugt 3:1 bis 1:3, insbesondere 2:1 bis 1:2 und speziell 1,5:1 bis 1:1,5. Für den besonderen Fall von Maleinsäureanhydrid als Monomer (A) beträgt das molare Einbauverhältnis von Maleinsäureanhydrid zu Monomeren ((B) und (C)) (in Summe) etwa 1:1.

Das molare Verhältnis vom obligaten Monomer (B) zum Monomer (C), soweit es anwesend ist, beträgt in der Regel von 1 : 0,05 bis 10, bevorzugt von 1 : 0,1 bis 6, besonders bevorzugt von 1 : 0,2 bis 4, ganz besonders bevorzugt von 1 : 0,3 bis 2,5 und speziell 1 : 0,5 bis 1,5.

In einer bevorzugten Ausführungsform ist zusätzlich zu Monomer (B) kein optionales Monomer (C) anwesend.

Der Anteil an einem oder mehreren der Monomere (D), soweit vorhanden, bezogen auf die Menge der Monomere (A), (B) sowie optional (C) (in Summe) beträgt in der Regel 5 bis 200 mol%, bevorzugt 10 bis 150 mol%, besonders bevorzugt 15 bis 100 mol%, ganz besonders bevorzugt 20 bis 50 mol% und insbesondere 0 bis 25 mol%.

In einer bevorzugten Ausführungsform ist kein optionales Monomer (D) anwesend.

In einem zweiten Reaktionsschritt (II) werden die im aus (I) erhaltenen Copolymer enthaltenen Anhydrid- oder Carbonsäureesterfunktionalitäten teilweise oder vollständige hydrolysiert und/oder verseift.

Bevorzugt werden 10 bis 100% der enthaltenen Anhydrid- oder Carbonsäureesterfunktionalitäten hydrolysiert und/oder verseift, bevorzugt mindestens 20%, besonders bevorzugt mindestens 30%, ganz besonders bevorzugt mindestens 50% und insbesondere mindestens 75% und speziell mindestens 85%.

Für eine Hydrolyse wird bezogen auf die enthaltenen Anhydridfunktionalitäten die Menge Wasser hinzugegeben, die dem gewünschten Hydrolysegrad entspricht und das aus (I) erhaltene Copolymer in Gegenwart des zugegebenen Wassers erwärmt. In der Regel ist dafür eine Temperatur von vorzugsweise 20 bis 150°C ausreichend, bevorzugt 60 bis 100°C. Falls erforderlich kann die Reaktion unter Druck durchgeführt werden, um das Entweichen von Wasser zu verhindern. Unter diesen Reaktionsbedingungen werden in der Regel selektiv die Anhydridfunktionalitäten im Copolymer umgesetzt, wohingegen etwaige im Copolymer enthaltene Carbonsäureesterfunktionalitäten nicht oder zumindest nur untergeordnet reagieren.

Das aus Reaktionsschritt (II) erhaltene Copolymer weist in der Regel ein gewichtsmittleres Molekulargewicht Mw von 1,5 bis 4 kDa auf (bestimmt durch Gelpermeationschromatographie mit Tetrahydrofuran und Polystyrol als Standard).
Das zahlenmittlere Molekulargewicht Mn beträgt zumeist von 0,5 bis 10 kDa, bevorzugt 0,6 bis 5, besonders bevorzugt 0,7 bis 4, ganz besonders bevorzugt 0,8 bis 3 und insbesondere 1 bis 2 kDa auf (bestimmt durch Gelpermeationschromatographie mit Tetrahydrofuran und Polystyrol als Standard).

Die Polydispersität beträgt in der Regel von 1 bis 10, bevorzugt von 1,1 bis 8, besonders bevorzugt von 1,2 bis 7, ganz besonders bevorzugt von 1,3 bis 5 und insbesondere von 1,5 bis 3.

Der Gehalt an Säuregruppen im Copolymer beträgt bevorzugt von 1 bis 8 mmol/g Copolymer, besonders bevorzugt von 2 bis 7,5, ganz besonders bevorzugt von 3 bis 7 mmol/g Copolymer.

In einer bevorzugten Ausführungsform enthalten die Copolymere einen hohen Anteil an benachbarten Carbonsäuregruppen, was durch eine Messung der Adjazenz (engl. Adjacency) bestimmt wird. Dazu wird eine Probe des Copolymers für eine Dauer von 30 Minuten bei einer Temperatur von 290 °C zwischen zwei Teflonfolien getempert und an einer blasenfreien Stelle ein FTIR Spektrum aufgenommen. Von den erhaltenen Spektren wird das IR-Spektrum von Teflon subtrahiert, die Schichtdicke bestimmt und der Gehalt an cyclischem Anhydrid bestimmt.

In einer bevorzugten Ausführungsform beträgt die Adjazenz mindestens 10 %, bevorzugt mindestens 15%, besonders bevorzugt mindestens 20%, ganz besonders bevorzugt mindestens 25% und insbesondere mindestens 30%.

### Verwendung

Die erfindungsgemäße Verwendung betrifft die Inhibierung der Korrosion von Eisen-, Stahl- und/oder Buntmetalloberflächen.

Unter den Buntmetallen sind dabei Kupfer und dessen Legierungen bevorzugt.

Besonders bevorzugt wird die Korrosion von Stahloberflächen inhibiert.

Die beschriebenen Copolymere werden Kraftstoffen mit dem oben spezifizierten Gehalt an Alkali- und/oder Erdalkalimetallen und/oder Zink in der Regel in Mengen von 1 bis 60, bevorzugt 4 bis 50 Gew. ppm und besonders bevorzugt von 10 bis 40 Gew. ppm zugesetzt.

### Häufig werden die beschriebenen Copolymere in Form von Kraftstoffadditivgemischen eingesetzt, zusammen mit üblichen Additiven:

Im Falle von Dieselkraftstoffen sind dies in erster Linie übliche Detergenz-Additive, Trägeröle, Kaltfließverbesserer, Schmierfähigkeitsverbesserer (Lubricity Improver), andere Korrosionsinhibitoren als die beschriebenen Copolymere, Demulgatoren, Dehazer, Antischaummittel, Cetanzahlverbesserer, Verbrennungsverbesserer, Antioxidantien oder Stabilisatoren, Antistatika, Metallocene, Metalldeaktivatoren, Farbstoffe und/oder Lösungsmittel.

Im Falle von Ottokraftstoffen sind dies vor allem Schmierfähigkeitsverbesserer (Friction Modifier), andere Korrosionsinhibitoren als die beschriebenen Copolymere, Demulgatoren, Dehazer, Antischaummittel, Verbrennungsverbesserer, Antioxidantien oder Stabilisatoren, Antistatika, Metallocene, Metalldeaktivatoren, Farbstoffe und/oder Lösungsmittel.

### Typische Beispiele geeigneter Co-Additive sind im folgenden Abschnitt aufgeführt:

### B1) Detergenz-Additive

Vorzugsweise handelt es sich bei den üblichen Detergenz-Additiven um amphiphile Substanzen, die mindestens einen hydrophoben Kohlenwasserstoffrest mit einem zahlengemittelten Molekulargewicht (Mₙ) von 85 bis 20.000 und mindestens eine polare Gruppierung besitzen, die ausgewählt ist unter:
(Da) Mono- oder Polyaminogruppen mit bis zu 6 Stickstoffatomen, wobei mindestens ein Stickstoffatom basische Eigenschaften hat;
(Db) Nitrogruppen, gegebenenfalls in Kombination mit Hydroxylgruppen;
(Dc) Hydroxylgruppen in Kombination mit Mono- oder Polyaminogruppen, wobei mindestens ein Stickstoffatom basische Eigenschaften hat;
(Dd) Carboxylgruppen oder deren Alkalimetall- oder Erdalkalimetallsalzen;
(De) Sulfonsäuregruppen oder deren Alkalimetall- oder Erdalkalimetallsalzen;
(Df) Polyoxy-C₂- bis C₄-alkylengruppierungen, die durch Hydroxylgruppen, Mono- oder Polyaminogruppen, wobei mindestens ein Stickstoffatom basische Eigenschaften hat, oder durch Carbamatgruppen terminiert sind;
(Dg) Carbonsäureestergruppen;
(Dh) aus Bernsteinsäureanhydrid abgeleiteten Gruppierungen mit Hydroxy- und/oder Amino- und/oder Amido- und/oder Imidogruppen; und/oder
(Di) durch Mannich-Umsetzung von substituierten Phenolen mit Aldehyden und Mo-no- oder Polyaminen erzeugten Gruppierungen.

Der hydrophobe Kohlenwasserstoffrest in den obigen Detergenz-Additiven, welcher für die ausreichende Löslichkeit im Kraftstoff sorgt, hat ein zahlengemitteltes Molekulargewicht (Mₙ) von 85 bis 20.000, vorzugsweise von 113 bis 10.000, besonders bevorzugt von 300 bis 5.000, stärker bevorzugt von 300 bis 3.000, noch stärker bevorzugt von 500 bis 2.500 und insbesondere von 700 bis 2.500, vor allem von 800 bis 1500. Als typischer hydrophober Kohlenwasserstoffrest, insbesondere in Verbindung mit den polaren insbesondere Polypropenyl-, Polybutenyl- und Polyisobutenylreste mit einem zahlenmittleren Molekulargewicht Mₙ von vorzugsweise jeweils 300 bis 5.000, besonders bevorzugt 300 bis 3.000, stärker bevorzugt 500 bis 2.500 noch stärker bevorzugt 700 bis 2.500 und insbesondere 800 bis 1.500 in Betracht.

### Als Beispiele für obige Gruppen von Detergenz-Additiven seien die folgenden genannt:

Mono- oder Polyaminogruppen (Da) enthaltende Additive sind vorzugsweise Polyalkenmono- oder Polyalkenpolyamine auf Basis von Polypropen oder von hochreaktivem (d.h. mit überwiegend endständigen Doppelbindungen) oder konventionellem (d.h. mit überwiegend mittenständigen Doppelbindungen) Polybuten oder Polyisobuten mit Mₙ = 300 bis 5000, besonders bevorzugt 500 bis 2500 und insbesondere 700 bis 2500. Derartige Additive auf Basis von hochreaktivem Polyisobuten, welche aus dem Polyisobuten, das bis zu 20 Gew.-% n-Buten-Einheiten enthalten kann, durch Hydroformylierung und reduktive Aminierung mit Ammoniak, Monoaminen oder Polyaminen wie Dimethyl-aminopropylamin, Ethylendiamin, Diethylentriamin, Triethylentetramin oder Tetraethylenpentamin hergestellt werden können, sind insbesondere aus der EP-A 244 616 bekannt. Geht man bei der Herstellung der Additive von Polybuten oder Polyisobuten mit überwiegend mittenständigen Doppelbindungen (meist in der β- und γ-Position) aus, bietet sich der Herstellweg durch Chlorierung und anschließende Aminierung oder durch Oxidation der Doppelbindung mit Luft oder Ozon zur Carbonyl- oder Carboxylverbindung und anschließende Aminierung unter reduktiven (hydrierenden) Bedingungen an. Zur Aminierung können hier Amine, wie z. B. Ammoniak, Monoamine oder die oben genannten Polyamine, eingesetzt werden. Entsprechende Additive auf Basis von Polypropen sind insbesondere in der WO-A 94/24231 beschrieben.

Weitere besondere Monoaminogruppen (Da) enthaltende Additive sind die Hydrierungsprodukte der Umsetzungsprodukte aus Polyisobutenen mit einem mittleren Polymerisationsgrad P = 5 bis 100 mit Stickoxiden oder Gemischen aus Stickoxiden und Sauerstoff, wie sie insbesondere in der WO-A 97/03946 beschrieben sind.

Weitere besondere Monoaminogruppen (Da) enthaltende Additive sind die aus Polyisobutenepoxiden durch Umsetzung mit Aminen und nachfolgender Dehydratisierung und Reduktion der Aminoalkohole erhältlichen Verbindungen, wie sie insbesondere in der DE-A 196 20 262 beschrieben sind.

Nitrogruppen (Db), gegebenenfalls in Kombination mit Hydroxylgruppen, enthaltende Additive sind vorzugsweise Umsetzungsprodukte aus Polyisobutenen des mittleren Polymerisationsgrades P = 5 bis 100 oder 10 bis 100 mit Stickoxiden oder Gemischen aus Stickoxiden und Sauerstoff, wie sie insbesondere in der WO-A96/03367 und in der WO-A 96/03479 beschrieben sind. Diese Umsetzungsprodukte stellen in der Regel Mischungen aus reinen Nitropolyisobutenen (z. B. α,β-Dinitropolyisobuten) und gemischten Hydroxynitropolyisobutenen (z. B. α-Nitro-β-hydroxypolyisobuten) dar.

Hydroxylgruppen in Kombination mit Mono- oder Polyaminogruppen (Dc) enthaltende Additive sind insbesondere Umsetzungsprodukte von Polyisobutenepoxiden, erhältlich aus vorzugsweise überwiegend endständige Doppelbindungen aufweisendem Polyisobuten mit Mₙ = 300 bis 5000 mit Ammoniak, Mono- oder Polyaminen, wie sie insbeson-dere in der EP-A 476 485 beschrieben sind.

Carboxylgruppen oder deren Alkalimetall- oder Erdalkalimetallsalze (Dd) enthaltende Additive sind vorzugsweise Copolymere von C₂- bis C₄₀-Olefinen mit Maleinsäureanhydrid mit einer Gesamt-Molmasse von 500 bis 20.000, deren Carboxylgruppen ganz oder teilweise zu den Alkalimetall- oder Erdalkalimetallsalzen und ein verbleibender Rest der Carboxylgruppen mit Alkoholen oder Aminen umgesetzt sind. Solche Additive sind insbesondere aus der EP-A 307 815 bekannt. Derartige Additive dienen hauptsächlich zur Verhinderung von Ventilsitzverschleiß und können, wie in der WO-A 87/01126 beschrieben, mit Vorteil in Kombination mit üblichen Kraftstoffdetergenzien wie Poly(iso)-butenaminen oder Polyetheraminen eingesetzt werden.

Sulfonsäuregruppen oder deren Alkalimetall- oder Erdalkalimetallsalze (De) enthaltende Additive sind vorzugsweise Alkalimetall- oder Erdalkalimetallsalze eines Sulfobernsteinsäurealkylesters, wie er insbesondere in der EP-A 639 632 beschrieben ist. Derartige Additive dienen hauptsächlich zur Verhinderung von Ventilsitzverschleiß und können mit Vorteil in Kombination mit üblichen Kraftstoffdetergenzien wie Poly(iso)buten-aminen oder Polyetheraminen eingesetzt werden.

Polyoxy-C₂-C₄-alkylengruppierungen (Df) enthaltende Additive sind vorzugsweise Polyether oder Polyetheramine, welche durch Umsetzung von C₂- bis C₆₀-Alkanolen, C₆- bis C₃₀-Alkandiolen, Mono- oder Di-C₂- bis C₃₀-alkylaminen, C₁- bis C₃₀-Alkylcyclo-hexanolen oder C₁-bis C₃₀-Alkylphenolen mit 1 bis 30 mol Ethylenoxid und/oder Propylenoxid und/oder Butylenoxid pro Hydroxylgruppe oder Aminogruppe und, im Falle der Polyetheramine, durch anschließende reduktive Aminierung mit Ammoniak, Monoaminen oder Polyaminen erhältlich sind. Derartige Produkte werden insbesondere in der EP-A 310 875, EP-A 356 725, EP-A 700 985 und US-A 4 877 416 beschrieben. Im Falle von Polyethern erfüllen solche Produkte auch Trägeröleigenschaften. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Carbonsäureestergruppen (Dg) enthaltende Additive sind vorzugsweise Ester aus Mo-no-, Di- oder Tricarbonsäuren mit langkettigen Alkanolen oder Polyolen, insbesondere solche mit einer Mindestviskosität von 2 mm²/s bei 100 °C, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 C-Atomen. Typische Vertreter der Ester sind Adipate, Phthalate, iso-Phthalate, Terephthalate und Trimellitate des iso-Octanols, iso-Nonanols, isoDecanols und des iso-Tridecanols. Derartige Produkte erfüllen auch Trägeröleigenschaften.

Aus Bernsteinsäureanhydrid abgeleitete Gruppierungen mit Hydroxy- und/oder Amino- und/oder Amido- und/oder insbesondere Imidogruppen (Dh) enthaltende Additive sind vorzugsweise entsprechende Derivate von Alkyl- oder Alkenyl-substituiertem Bernsteinsäureanhydrid und insbesondere die entsprechenden Derivate von Polyisobutenylbernsteinsäureanhydrid, welche durch Umsetzung von konventionellem oder hochreaktivem Polyisobuten mit Mₙ = vorzugsweise 300 bis 5000, besonders bevorzugt 300 bis 3000, stärker bevorzugt 500 bis 2500, noch stärker bevorzugt 700 bis 2500 und insbesondere 800 bis 1500, mit Maleinsäureanhydrid auf thermischem Weg in einer En-Reaktion oder über das chlorierte Polyisobuten erhältlich sind. Bei den Gruppierungen mit Hydroxy- und/oder Amino- und/oder Amido- und/oder Imidogruppen handelt es sich beispielsweise um Carbonsäuregruppen, Säureamide von Monoaminen, Säure-amide von Di- oder Polyaminen, die neben der Amidfunktion noch freie Amingruppen aufweisen, Bernsteinsäurederivate mit einer Säure- und einer Amidfunktion, Carbonsäureimide mit Monoaminen, Carbonsäureimide mit Di- oder Polyaminen, die neben der Imidfunktion noch freie Amingruppen aufweisen, oder Diimide, die durch die Umsetzung von Di- oder Polyaminen mit zwei Bernsteinsäurederivaten gebildet werden. Derartige Kraftstoffadditive sind allgemein bekannt und beispielsweise in den Dokumenten (1) und (2) beschrieben. Bevorzugt handelt es sich um die Umsetzungsprodukte von Alkyl- oder Alkenyl-substituierten Bernsteinsäuren oder Derivaten davon mit Aminen und besonders bevorzugt um die Umsetzungsprodukte von Polyisobutenyl-substituierten Bernsteinsäuren oder Derivaten davon mit Aminen. Von besonderem Interesse sind hierbei Umsetzungsprodukte mit aliphatischen Polyaminen (Polyalkylenimine) wie insbesondere Ethylendiamin, Diethylentriamin, Triethylentetramin, Tetraethylenpentamin, Pentaethylenhexamin und Hexaethylenheptamin, welche eine Imidstruktur aufweisen.

Durch Mannich-Umsetzung von substituierten Phenolen mit Aldehyden und Mono- oder Polyaminen erzeugte Gruppierungen (Di) enthaltende Additive sind vorzugsweise Umsetzungsprodukte von Polyisobuten-substituierten Phenolen mit Formaldehyd und Mono- oder Polyaminen wie Ethylendiamin, Diethylentriamin, Triethylentetramin, Tetra-ethylenpentamin oder Dimethyl-aminopropylamin. Die Polyisobutenyl-substituierten Phenole können aus konventionellem oder hochreaktivem Polyisobuten mit Mₙ = 300 bis 5000 stammen. Derartige "Polyisobuten-Mannichbasen" sind insbesondere in der EP-A 831 141 beschrieben.

Dem Kraftstoff können ein oder mehrere der genannten Detergenz-Additive in solch einer Menge zugegeben werden, dass die Dosierrate an diesen Detergenz-Additiven vozugsweise 25 bis 2500 Gew.-ppm, insbesondere 75 bis 1500 Gew.-ppm, vor allem 150 bis 1000 Gew.-ppm, beträgt.

### B2) Trägeröle

Mitverwendete Trägeröle können mineralischer oder synthetischer Natur sein. Geeignete mineralische Trägeröle sind bei der Erdölverarbeitung anfallende Fraktionen, wie Brightstock oder Grundöle mit Viskositäten wie beispielsweise aus der Klasse SN 500 bis 2000, aber auch aromatische Kohlenwasserstoffe, paraffinische Kohlenwasserstoffe und Alkoxyalkanole. Brauchbar ist ebenfalls eine als "hydrocrack oil" bekannte und bei der Raffination von Mineralöl anfallende Fraktion (Vakuumdestillatschnitt mit einem Siedebereich von etwa 360 bis 500 °C, erhältlich aus unter Hochdruck katalytisch hydriertem und isomerisiertem sowie entparaffiniertem natürlichen Mineralöl). Ebenfalls geeignet sind Mischungen oben genannter mineralischer Trägeröle.

Beispiele für geeignete synthetische Trägeröle sind Polyolefine (Polyalphaolefine oder Polyinternalolefine), (Poly)ester, Poly)alkoxylate, Polyether, aliphatische Polyetheramine, alkylphenolgestartete Polyether, alkylphenolgestartete Polyetheramine und Carbonsäureester langkettiger Alkanole.

Beispiele für geeignete Polyolefine sind Olefinpolymerisate mit Mₙ = 400 bis 1800, vor allem auf Polybuten- oder Polyisobuten-Basis (hydriert oder nicht hydriert).

Beispiele für geeignete Polyether oder Polyetheramine sind vorzugsweise Polyoxy-C₂- bis C₄-alkylengruppierungen enthaltende Verbindungen, welche durch Umsetzung von C₂- bis C₆₀-Alkanolen, C₆- bis C₃₀-Alkandiolen, Mono- oder Di-C₂- bis C₃₀-alkylaminen, C₁- bis C₃₀-Alkyl-cyclohexanolen oder C₁- bis C₃₀-Alkylphenolen mit 1 bis 30 mol Ethylenoxid und/ oder Propylenoxid und/oder Butylenoxid pro Hydroxylgruppe oder Amino-gruppe und, im Falle der Polyetheramine, durch anschließende reduktive Aminierung mit Ammoniak, Monoaminen oder Polyaminen erhältlich sind. Derartige Produkte werden insbesondere in der EP-A 310 875, EP-A 356 725, EP-A 700 985 und der US-A 4,877,416 beschrieben. Beispielsweise können als Polyetheramine Poly-C₂- bis C₆-Alkylenoxidamine oder funktionelle Derivate davon verwendet werden. Typische Beispiele hierfür sind Tridecanol- oder Isotridecanolbutoxylate, Isononylphenolbutoxylate sowie Polyisobutenolbutoxylate und -propoxylate sowie die entsprechenden Umsetzungsprodukte mit Ammoniak.

Beispiele für Carbonsäureester langkettiger Alkanole sind insbesondere Ester aus Mono-, Di- oder Tricarbonsäuren mit langkettigen Alkanolen oder Polyolen, wie sie insbesondere in der DE-A 38 38 918 beschrieben sind. Als Mono-, Di- oder Tricarbonsäuren können aliphatische oder aromatische Säuren eingesetzt werden, als Esteralkohole bzw. -polyole eignen sich vor allem langkettige Vertreter mit beispielsweise 6 bis 24 Kohlenstoffatomen. Typische Vertreter der Ester sind Adipate, Phthalate, iso-Phthalate, Terephthalate und Trimellitate des Isooctanols, Isononanols, Isodecanols und des Iso-tridecanols, z. B. Di-(n- oder Isotridecyl)phthalat.

Weitere geeignete Trägerölsysteme sind beispielsweise in der DE-A 38 26 608, DE-A 41 42 241, DE-A 43 09 074, EP-A 452 328 und der EP-A 548 617 beschrieben.
Beispiele für besonders geeignete synthetische Trägeröle sind alkoholgestartete Polyether mit etwa 5 bis 35, vorzugsweise etwa 5 bis 30, besonders bevorzugt 10 bis 30 und insbesondere 15 bis 30 C₃- bis C₆-Alkylenoxideinheiten, z. B. Propylenoxid-, n-Butylenoxid- und Isobutylenoxid-Einheiten oder Gemischen davon, pro Alkoholmolekül. Nichtlimitierende Beispiele für geeignete Starteralkohole sind langkettige Alkanole oder mit langkettigem Alkyl-substituierte Phenole, wobei der langkettige Alkylrest insbesondere für einen geradkettigen oder verzweigten C₆-bis C₁₈-Alkylrest steht. Als besondere Beispiele sind zu nennen Tridecanol und Nonylphenol. Besonders bevorzugte alkoholgestartete Polyether sind die Umsetzungsprodukte (Polyveretherungsprodukte) von einwertigen aliphatischen C₆- bis C₁₈-Alkoholen mit C₃- bis C₆-Alkylenoxiden. Beispiele für einwertige aliphatische C₆-C₁₈-Alkohole sind Hexanol, Heptanol, Octanol, 2-Ethyl-hexanol, Nonylalkohol, Decanol, 3-Propylheptanol, Undecanol, Dodecanol, Tridecanol, Tetradecanol, Pentadecanol, Hexadecanol, Octadecanol und deren Konstitutions- und Stellungsisomere. Die Alkohole können sowohl in Form der reinen Isomere als auch in Form technischer Gemische eingesetzt werden. Ein besonders bevorzugter Alkohol ist Tridecanol. Beispiele für C₃- bis C₆-Alkylenoxide sind Propylenoxid, wie 1,2-Propylen-oxid, Butylenoxid, wie 1,2-Butylenoxid, 2,3-Butylenoxid, Isobutylenoxid oder Tetrahydrofuran, Pentylenoxid und Hexylenoxid. Besonders bevorzugt sind hierunter C₃- bis C₄-Alkylenoxide, d.h. Propylenoxid wie 1,2-Propylenoxid und Butylenoxid wie 1,2-Buty-lenoxid, 2,3-Butylenoxid und Isobutylenoxid. Speziell verwendet man Butylenoxid.

Weitere geeignete synthetische Trägeröle sind alkoxylierte Alkylphenole, wie sie in der DE-A 10 102 913 beschrieben sind.

Besondere Trägeröle sind synthetische Trägeröle, wobei die zuvor beschriebenen alkoholgestarteten Polyether besonders bevorzugt sind.

Das Trägeröl bzw. das Gemisch verschiedener Trägeröle wird dem Kraftstoff in einer Menge von vorzugsweise 1 bis 1000 Gew.-ppm, besonders bevorzugt von 10 bis 500 Gew.-ppm und insbesondere von 20 bis 100 Gew.-ppm zugesetzt.

### B3) Kaltfließverbesserer

Geeignete Kaltfließverbesserer sind im Prinzip alle organischen Verbindungen, welche in der Lage sind, das Fließverhalten von Mitteldestillat-Kraftstoffen bzw. Dieselkraftstoffen in der Kälte zu verbessern. Zweckmäßigerweise müssen sie eine ausreichende Öllöslichkeit aufweisen. Insbesondere kommen hierfür die üblicherweise bei Mitteldestillaten aus fossilem Ursprung, also bei üblichen mineralischen Dieselkraftstoffen, eingesetzten Kaltfließverbesserer ("middle distillate flow improvers", "MDFI") in Betracht. Jedoch können auch organische Verbindungen verwendet werden, die beim Einsatz in üblichen Dieselkraftstoffen zum Teil oder überwiegend die Eigenschaften eines Wax Anti-Settling Additivs ("WASA") aufweisen. Auch können sie zum Teil oder überwiegend als Nukleatoren wirken. Es können aber auch Mischungen aus als MDFI wirksamen und/oder als WASA wirksamen und/oder als Nukleatoren wirksamen organischen Verbindungen eingesetzt werden.

Typischerweise wird der Kaltfließverbesserer ausgewählt aus:
(K1) Copolymeren eines C₂- bis C₄₀-Olefins mit wenigstens einem weiteren ethylenisch ungesättigten Monomer;
(K2) Kammpolymeren;
(K3) Polyoxyalkylenen;
(K4) polaren Stickstoffverbindungen;
(K5) Sulfocarbonsäuren oder Sulfonsäuren oder deren Derivaten; und
(K6) Poly(meth)acrylsäureestern.

Es können sowohl Mischungen verschiedener Vertreter aus einer der jeweiligen Klassen (K1) bis (K6) als auch Mischungen von Vertretern aus verschiedenen Klassen (K1) bis (K6) eingesetzt werden.

Geeignete C₂- bis C₄₀-Olefin-Monomere für die Copolymeren der Klasse (K1) sind beispielsweise solche mit 2 bis 20, insbesondere 2 bis10 Kohlenstoffatomen sowie mit 1 bis 3, vorzugsweise mit 1 oder 2, insbesondere mit einer Kohlenstoff-Kohlenstoff-Dop-pelbindung. Im zuletzt genannten Fall kann die Kohlenstoff-Kohlenstoff-Doppelbindung sowohl terminal (α-Olefine) als auch intern angeordnet sein kann. Bevorzugt sind jedoch α-Olefine, besonders bevorzugt α-Olefine mit 2 bis 6 Kohlenstoffatomen, beispielsweise Propen, 1-Buten, 1-Penten, 1-Hexen und vor allem Ethylen.

Bei den Copolymeren der Klasse (K1) ist das wenigstens eine weitere ethylenisch ungesättigte Monomer vorzugsweise ausgewählt unter Carbonsäurealkenylestern, (Meth)Acrylsäureestern und weiteren Olefinen.

Werden weitere Olefine mit einpolymerisiert, sind dies vorzugsweise höhermolekulare als das oben genannte C₂- bis C₄₀-Olefin-Basismonomere. Setzt man beispielsweise als Olefin-Basismonomer Ethylen oder Propen ein, eignen sich als weitere Olefine insbesondere C₁₀- bis C₄₀-α-Olefine. Weitere Olefine werden in den meisten Fällen nur dann mit einpolymerisiert, wenn auch Monomere mit Carbonsäureester-Funktionen eingesetzt werden.

Geeignete (Meth)Acrylsäureester sind beispielsweise Ester der (Meth)Acrylsäure mit C₁- bis C₂₀-Alkanolen, insbesondere C₁- bis C₁₀-Alkanolen, vor allem mit Methanol, Ethanol, Propanol, Isopropanol, n-Butanol, sec.-Butanol, Isobutanol, tert.-Butanol, Pentanol, Hexanol, Heptanol, Octanol, 2-Ethylhexanol, Nonanol und Decanol sowie Strukturisomeren hiervon.

Geeignete Carbonsäurealkenylester sind beispielsweise C₂- bis C₁₄-Alkenylester, z.B. die Vinyl- und Propenylester, von Carbonsäuren mit 2 bis 21 Kohlenstoffatomen, deren Kohlenwasserstoffrest linear oder verzweigt sein kann. Bevorzugt sind hierunter die Vinylester. Unter den Carbonsäuren mit verzweigtem Kohlenwasserstoffrest sind solche bevorzugt, deren Verzweigung sich in der α-Position zur Carboxylgruppe befindet, wobei das α-Kohlenstoffatom besonders bevorzugt tertiär ist, d. h. die Carbonsäure eine sogenannte Neocarbonsäure ist. Vorzugsweise ist der Kohlenwasserstoffrest der Carbonsäure jedoch linear.

Beispiele für geeignete Carbonsäurealkenylester sind Vinylacetat, Vinylpropionat, Vinylbutyrat, Vinyl-2-ethylhexanoat, Neopentansäurevinylester, Hexansäurevinylester, Neononansäurevinylester, Neodecansäurevinylester und die entsprechenden Propenyl-ester, wobei die Vinylester bevorzugt sind. Ein besonders bevorzugter Carbonsäurealkenylester ist Vinylacetat; typische hieraus resultierende Copolymere der Gruppe (K1) sind die mit am häufigsten eingesetzten Ethylen-Vinylacetat-Copolymere ("EVA").
Besonders vorteilhaft einsetzbare Ethylen-Vinylacetat-Copolymere und ihre Herstellung sind in der WO 99/29748 beschrieben.

Als Copolymere der Klasse (K1) sind auch solche geeignet, die zwei oder mehrere voneinander verschiedene Carbonsäurealkenylester einpolymerisiert enthalten, wobei diese sich in der Alkenylfunktion und/oder in der Carbonsäuregruppe unterscheiden. Ebenfalls geeignet sind Copolymere, die neben dem/den Carbonsäurealkenylester(n) wenigstens ein Olefin und/oder wenigstens ein (Meth)Acrylsäureester einpolymerisiert enthalten.

Auch Terpolymere aus einem C₂- bis C₄₀-α-Olefin, einem C₁- bis C₂₀-Alkylester einer ethylenisch ungesättigten Monocarbonsäure mit 3 bis 15 Kohlenstoffatomen und einem C₂- bis C₁₄-Alkenylester einer gesättigten Monocarbonsäure mit 2 bis 21 Kohlenstoffatomen sind als Copolymere der Klasse (K1) geeignet. Derartige Terpolymere sind in der WO 2005/054314 beschrieben. Ein typisches derartiges Terpolymer ist aus Ethylen, Acrylsäure-2-ethylhexylester und Vinylacetat aufgebaut.

Das wenigstens eine oder die weiteren ethylenisch ungesättigten Monomeren sind in den Copolymeren der Klasse (K1) in einer Menge von vorzugsweise 1 bis 50 Gew.-%, insbesondere von 10 bis 45 Gew.-% und vor allem von 20 bis 40 Gew.-%, bezogen auf das Gesamtcopolymer, einpolymerisiert. Der gewichtsmäßige Hauptanteil der Monomereinheiten in den Copolymeren der Klasse (K1) stammt somit in der Regel aus den C₂- bis C₄₀-Basis-Olefinen.

Die Copolymere der Klasse (K1) weisen vorzugsweise ein zahlenmittleres Molekulargewicht Mₙ von 1000 bis 20.000, besonders bevorzugt von 1000 bis 10.000 und insbesondere von 1000 bis 8000 auf.

Typische Kammpolymere der Komponente (K2) sind beispielsweise durch die Copolymerisation von Maleinsäureanhydrid oder Fumarsäure mit einem anderen ethylenisch ungesättigten Monomer, beispielsweise mit einem α-Olefin oder einem ungesättigten Ester wie Vinylacetat, und anschließende Veresterung der Anhydrid- bzw. Säurefunktion mit einem Alkohol mit wenigstens 10 Kohlenstoffatomen erhältlich. Weitere geeignete Kammpolymere sind Copolymere von α-Olefinen und veresterten Comonomeren, beispielsweise veresterte Copolymere von Styrol und Maleinsäureanhydrid oder veresterte Copolymere von Styrol und Fumarsäure. Geeignete Kammpolymere können auch Polyfumarate oder Polymaleinate sein. Außerdem sind Homo- und Copolymere von Vinylethern geeignete Kammpolymere. Als Komponente der Klasse (K2) geeignete Kammpolymere sind beispielsweise auch solche, die in der WO 2004/035715 und in "Comb-Like Polymers. Structure and Properties", N. A. Plate und V. P. Shibaev, J. Poly. Sci. Macromolecular Revs. 8, Seiten 117 bis 253 (1974)" beschrieben sind. Auch Gemische von Kammpolymeren sind geeignet.

Als Komponente der Klasse (K3) geeignete Polyoxyalkylene sind beispielsweise Polyoxyalkylenester, Polyoxyalkylenether, gemischte Polyoxyalkylenesterether und Gemische davon. Bevorzugt enthalten diese Polyoxyalkylenverbindungen wenigstens eine, vorzugsweise wenigstens zwei lineare Alkylgruppen mit jeweils 10 bis 30 Kohlenstoffatomen und eine Polyoxyalkylengruppe mit einem zahlenmittleren Molekulargewicht von bis zu 5000. Derartige Polyoxyalkylenverbindungen sind beispielsweise in der EP-A 061 895 sowie in der US 4 491 455 beschrieben. Besondere Polyoxyalkylenverbindungen basieren auf Polyethylenglykolen und Polypropylenglykolen mit einem zahlenmittleren Molekulargewicht von 100 bis 5000. Weiterhin sind Polyoxyalkylenmono- und -diester von Fettsäuren mit 10 bis 30 Kohlenstoffatomen wie Stearinsäure oder Behensäure geeignet.

Als Komponente der Klasse (K4) geeignete polare Stickstoffverbindungen können sowohl ionischer als auch nicht ionischer Natur sein und besitzen vorzugsweise wenigstens einen, insbesondere wenigstens zwei Substituenten in Form eines tertiären Stickstoffatoms der allgemeinen Formel >NR⁷, worin R⁷ für einen C₈- bis C₄₀-Kohlenwas-serstoffrest steht. Die Stickstoffsubstituenten können auch quaternisiert, das heißt in kationischer Form, vorliegen. Beispiele für solche Stickstoffverbindungen sind Ammoniumsalze und/oder Amide, die durch die Umsetzung wenigstens eines mit wenigstens einem Kohlenwasserstoffrest substituierten Amins mit einer Carbonsäure mit 1 bis 4 Carboxylgruppen bzw. mit einem geeignetem Derivat davon erhältlich sind. Vorzugsweise enthalten die Amine wenigstens einen linearen C₈- bis C₄₀-Alkylrest. Zur Herstellung der genannten polaren Stickstoffverbindungen geeignete primäre Amine sind bei-spielsweise Octylamin, Nonylamin, Decylamin, Undecylamin, Dodecylamin, Tetradecylamin und die höheren linearen Homologen, hierzu geeignete sekundäre Amine sind beispielsweise Dioctadecylamin und Methylbehenylamin. Geeignet sind hierzu auch Amingemische, insbesondere großtechnisch zugängliche Amingemische wie Fettamine oder hydrierte Tallamine, wie sie bei-spielsweise in Ullmanns Encyclopedia of Industrial Chemistry, 6. Auflage, im Kapitel "Amines, aliphatic" beschrieben werden. Für die Umsetzung geeignete Säuren sind beispielsweise Cyclohexan-1,2-dicarbonsäure, Cyclohexen-1,2-dicarbonsäure, Cyclopentan-1,2-dicarbonsäure, Naphthalindicarbonsäure, Phthalsäure, Isophthalsäure, Terephthalsäure und mit langkettigen Kohlenwasserstoffresten substituierte Bernsteinsäuren.

Insbesondere ist die Komponente der Klasse (K4) ein öllösliches Umsetzungsprodukt aus mindestens eine tertiäre Aminogruppe aufweisenden Poly(C₂- bis C₂₀-Carbon-säu-ren) mit primären oder sekundären Aminen. Die diesem Umsetzungsprodukt zugrundeliegenden mindestens eine tertiäre Aminogruppe aufweisenden Poly(C₂- bis C₂₀-Car-bonsäuren) enthalten vorzugsweise mindestens 3 Carboxylgruppen, insbesondere 3 bis 12, vor allem 3 bis 5 Carboxylgruppen. Die Carbonsäure-Einheiten in den Polycarbonsäuren weisen vorzugsweise 2 bis 10 Kohlenstoffatome auf, insbesondere sind es Essigsäure-Einheiten. Die Carbonsäure-Einheiten sind in geeigneter Weise zu den Polycarbonsäuren verknüpft, meist über ein oder mehrere Kohlenstoff- und/oder Stickstoffatome. Vorzugsweise sind sie an tertiäre Stickstoffatome angebunden, die im Falle mehrerer Stickstoffatome über Kohlenwasserstoffketten verbunden sind.

Vorzugsweise ist die Komponente der Klasse (K4) ein öllösliches Umsetzungsprodukt auf Basis von mindestens eine tertiäre Aminogruppe aufweisenden Poly(C₂- bis C₂₀-Carbonsäuren) der allgemeinen Formel IIa oder IIb 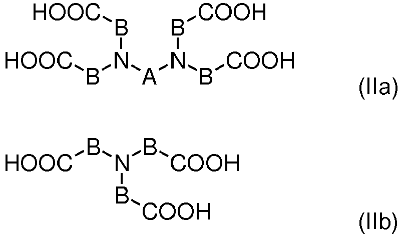 in denen die Variable A eine geradkettige oder verzweigte C₂- bis C₆-Alkylengruppe oder die Gruppierung der Formel III 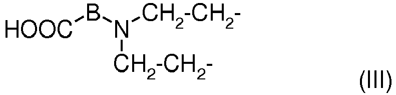 darstellt und die Variable B eine C₁- bis C₁₉-Alkylengruppe bezeichnet. Die Verbindungen der allgemeinen Formel IIa und IIb weisen insbesondere die Eigenschaften eines WASA auf.

Weiterhin ist das bevorzugte öllösliche Umsetzungsprodukt der Komponente (K4), insbesondere das der allgemeinen Formel IIa oder IIb, ein Amid, ein Amidammoniumsalz oder ein Ammoniumsalz, in dem keine, eine oder mehrere Carbonsäuregruppen in Amidgruppen übergeführt sind.

Geradkettige oder verzweigte C₂- bis C₆-Alkylengruppen der Variablen A sind beispielsweise 1,1-Ethylen, 1,2-Propylen, 1,3-Propylen, 1,2-Butylen, 1,3-Butylen, 1,4-Bu-tylen, 2-Methyl-1,3-propylen, 1,5-Pentylen, 2-Methyl-1,4-butylen, 2,2-Dimethyl-1,3-pro-pylen, 1,6-Hexylen (Hexamethylen) und insbesondere 1,2-Ethylen. Vorzugsweise umfasst die Variable A 2 bis 4, insbesondere 2 oder 3 Kohlenstoffatome.

C₁- bis C₁₉-Alkylengruppen der Variablen B sind vor beispielsweise 1,2-Ethylen, 1,3-Propylen, 1,4-Butylen, Hexamethylen, Octamethylen, Decamethylen, Dodecamethylen, Tetradecamethylen, Hexadecamethylen, Octadecamethylen, Nonadecamethylen und insbesondere Methylen. Vorzugsweise umfasst die Variable B 1 bis 10, insbesondere 1 bis 4 Kohlenstoffatome.

Die primären und sekundären Amine als Umsetzungspartner für die Polycarbonsäuren zur Bildung der Komponente (K4) sind üblicherweise Monoamine, insbesondere aliphatische Monoamine. Diese primären und sekundären Amine können aus einer Vielzahl von Aminen ausgewählt sein, die - gegebenenfalls miteinander verbundene - Kohlenwasserstoffreste tragen.

Meist sind diese den öllöslichen Umsetzungsprodukten der Komponente (K4) zugrundeliegenden Amine sekundären Amine und weisen die allgemeine Formel HN(R⁸)₂ auf, in der die beiden Variablen R⁸ unabhängig voneinander jeweils geradkettige oder verzweigte C₁₀- bis C₃₀-Alkylreste, insbesondere C₁₄- bis C₂₄-Alkylreste bedeuten. Diese längerkettigen Alkylreste sind vorzugsweise geradkettig oder nur in geringem Grade verzweigt. In der Regel leiten sich die genannten sekundären Amine hinsichtlich ihrer längerkettigen Alkylreste von natürlich vorkommenden Fettsäuren bzw. von deren Derivaten ab. Vorzugsweise sind die beiden Reste R⁸ gleich.

Die genannten sekundären Amine können mittels Amidstrukturen oder in Form der Ammoniumsalze an die Polycarbonsäuren gebunden sein, auch kann nur ein Teil als Amidstrukturen und ein anderer Teil als Ammoniumsalze vorliegen. Vorzugsweise liegen nur wenige oder keine freien Säuregruppen vor. Vorzugsweise liegen die öllöslichen Umsetzungsprodukte der Komponente (K4) vollständig in Form der Amidstrukturen vor.

Typische Beispiele für derartige Komponenten (K4) sind Umsetzungsprodukte der Nitrilotriessigsäure, der Ethylendiamintetraessigsäure oder der Propylen-1,2-diamintetra-essigsäure mit jeweils 0,5 bis 1,5 Mol pro Carboxylgruppe, insbesondere 0,8 bis 1,2 Mol pro Carboxylgruppe, Dioleylamin, Dipalmitinamin, Dikokosfettamin, Distearylamin, Dibehenylamin oder insbesondere Ditalgfettamin. Eine besonders bevorzugte Komponente (K4) ist das Umsetzungsprodukt aus 1 Mol Ethylendiamintetraessigsäure und 4 Mol hydriertem Ditalgfettamin.

Als weitere typische Beispiele für die Komponente (K4) seien die N,N-Dialkylammoni-umsalze von 2-N',N'-Dialkylamidobenzoaten, beispielsweise das Reaktionsprodukt aus 1 Mol Phthalsäureanhydrid und 2 Mol Ditalgfettamin, wobei letzteres hydriert oder nicht hydriert sein kann, und das Reaktionsprodukt von 1 Mol eines Alkenylspirobislactons mit 2 Mol eines Dialkylamins, bei-spielsweise Ditalgfettamin und/oder Talgfettamin, wobei die beiden letzteren hydriert oder nicht hydriert sein können, genannt.

Weitere typische Strukturtypen für die Komponente der Klasse (K4) sind cyclische Verbindungen mit tertiären Aminogruppen oder Kondensate langkettiger primärer oder sekundärer Amine mit carbonsäurehaltigen Polymeren, wie sie in der WO 93/18115 beschrieben sind.
Als Kaltfließverbesserer der Komponente der Klasse (K5) geeignete Sulfocarbonsäuren, Sulfonsäuren oder deren Derivate sind beispielsweise die öllöslichen Carbonsäureamide und Carbonsäureester von ortho-Sulfobenzoesäure, in denen die Sulfonsäurefunktion als Sulfonat mit alkylsubstituierten Ammoniumkationen vorliegt, wie sie in der EP-A 261 957 beschrieben werden.

Als Kaltfließverbesserer der Komponente der Klasse (K6) geeignete Poly(meth)acryl-säureester sind sowohl Homo- als auch Copolymere von Acryl- und Methacrylsäure-estern. Bevorzugt sind Copolymere von wenigstens zwei voneinander verschiedenen (Meth)Acrylsäureestern, die sich bezüglich des einkondensierten Alkohols unterscheiden. Gegebenenfalls enthält das Copolymer noch ein weiteres, davon verschiedenes olefinisch ungesättigtes Monomer einpolymerisiert. Das gewichtsmittlere Molekulargewicht des Polymers beträgt vorzugsweise 50.000 bis 500.000. Ein besonders bevorzugtes Polymer ist ein Copolymer von Methacrylsäure und Methacrylsäureestern von gesättigten C₁₄- und C₁₅-Alkoholen, wobei die Säuregruppen mit hydriertem Tallamin neutralisiert sind. Geeignete Poly(meth)acrylsäureester sind beispielsweise in der WO 00/44857 beschrieben.

Dem Mitteldestillat-Kraftstoff bzw. Dieselkraftstoff wird der Kaltfließverbesserer bzw. das Gemisch verschiedener Kaltfließverbesserer in einer Gesamtmenge von vorzugsweise 10 bis 5000 Gew.-ppm, besonders bevorzugt von 20 bis 2000 Gew.-ppm, stärker bevorzugt von 50 bis 1000 Gew.-ppm und insbesondere von 100 bis 700 Gew.-ppm, z.B. von 200 bis 500 Gew.-ppm, zugegeben.

### B4) Schmierfähigkeitsverbesserer

Geeignete Schmierfähigkeitsverbesserer (Lubricity Improver bzw. Friction Modifier) basieren üblicherweise auf Fettsäuren oder Fettsäureestern. Typische Beispiele sind Tallölfettsäure, wie beispielsweise in der WO 98/004656 beschrieben, und Glycerinmonooleat. Auch die in der US 6 743 266 B2 beschriebenen Reaktionsprodukte aus natürlichen oder synthetischen Ölen, beispielsweise Triglyceriden, und Alkanolaminen sind als solche Schmierfähigkeitsverbesserer geeignet.

### B5) Andere Korrosionsinhibitoren als das beschriebene Copolymer

Geeignete Korrosionsinhibitoren sind z.B. Bernsteinsäureester, vor allem mit Polyolen, Fettsäurederivate, z.B. Ölsäureester, oligomerisierte Fettsäuren, substituierte Ethanol-amine und Produkte, die unter dem Handelsnamen RC 4801 (Rhein Chemie Mannheim, Deutschland), Irgacor® L12 (BASF SE) oder HiTEC 536 (Ethyl Corporation) vertrieben werden.

### B6) Demulgatoren

Geeignete Demulgatoren sind z.B. die Alkali- oder Erdalkalisalze von Alkyl-substituier-ten Phenol- und Naphthalinsulfonaten und die Alkali- oder Erdalkalisalze von Fettsäuren, außerdem neutrale Verbindungen wie Alkoholalkoxylate, z.B. Alkoholethoxylate, Phenolalkoxylate, z.B. tert-Butylphenolethoxylat oder tert-Pentylphenolethoxylat, Fettsäuren, Alkylphenole, Kondensationsprodunkte von Ethylenoxid (EO) und Propylenoxid (PO), z.B. auch in Form von EO/PO-Blockcopolymeren, Polyethylenimine oder auch Polysiloxane.

### B7) Dehazer

Geeignete Dehazer sind z.B. alkoxylierte Phenol-Formaldehyd-Kondensate, wie beispielsweise die unter dem Handelsnamen erhältlichen Produkte NALCO 7D07 (Nalco) und TOLAD 2683 (Petrolite).

### B8) Antischaummittel

Geeignete Antischaummittel sind z.B. Polyether-modifizierte Polysiloxane, wie beispielsweise die unter dem Handelsnamen erhältlichen Produkte TEGOPREN 5851 (Goldschmidt), Q 25907 (Dow Corning) und RHODOSIL (Rhone Poulenc).

### B9) Cetanzahlverbesserer

Geeignete Cetanzahlverbesserer sind z.B. aliphatische Nitrate wie 2-Ethylhexylnitrat und Cyclohexylnitrat sowie Peroxide wie Di-tert-butylperoxid.

### B10) Antioxidantien

Geeignete Antioxidantien sind z.B. substituierte Phenole, wie 2,6-Di-tert.-butylphenol und 6-Di-tert.-butyl-3-methylphenol sowie Phenylendiamine wie N,N'-Di-sec.-butyl-p-phenylendiamin.

### B11) Metalldeaktivatoren

Geeignete Metalldeaktivatoren sind z.B. Salicylsäurederivate wie N,N'-Disalicyliden-1,2-propandiamin.

### B12) Lösungsmittel

Geeignete sind z.B. unpolare organische Lösungsmittel wie aromatische und aliphatische Kohlenwasserstoffe, beispielsweise Toluol, Xylole, "white spirit" und Produkte, die unter dem Handelsnamen SHELLSOL (Royal Dutch/Shell Group) und EXXSOL (ExxonMobil) vertrieben werden, sowie polare organische Lösungsmittel, bei-spielsweise Alkohole wie 2-Ethylhexanol, Decanol und Isotridecanol. Derartige Lösungsmittel gelangen meist zusammen mit den vorgenannten Additiven und Co-Additi-ven, die sie zur besseren Handhabung lösen oder verdünnen sollen, in den Dieselkraftstoff.

### C) Kraftstoffe

Die erfindungsgemäße Verwendung betrifft Diesel- und Ottokraftstoffe.

Bei Mitteldestillat-Kraftstoffen wie Dieselkraftstoffen oder Heizölen handelt es sich vorzugsweise um Erdölraffinate, die üblicherweise einen Siedebereich von 100 bis 400°C haben. Dies sind meist Destillate mit einem 95%-Punkt bis zu 360°C oder auch darüber hinaus. Dies können aber auch so genannte "Ultra Low Sulfur Diesel" oder "City Diesel" sein, gekennzeichnet durch einen 95%-Punkt von beispielsweise maximal 345°C und einem Schwefelgehalt von maximal 0,005 Gew.-% oder durch einen 95%-Punkt von beispielsweise 285°C und einem Schwefelgehalt von maximal 0,001 Gew.-%. Neben den durch Raffination erhältlichen mineralischen Mitteldestillat-Kraftstoffen bzw. Dieselkraftstoffen sind auch solche, die durch Kohlevergasung oder Gasverflüssigung ["gas to liquid" (GTL)-Kraftstoffe] oder durch Biomasse-Verflüssigung ["biomass to liquid" (BTL)-Kraftstoffe] erhältlich sind, geeignet. Geeignet sind auch Mischungen der vorstehend genannten Mitteldestillat-Kraftstoffe bzw. Dieselkraftstoffe mit regenerativen Kraftstoffen, wie Biodiesel oder Bioethanol.

Die Qualitäten der Heizöle und Dieselkraftstoffe sind beispielsweise in DIN 51603 und EN 590 näher festgelegt (vgl. auch Ullmann's Encyclopedia of Industrial Chemistry, 5. Auflage, Band A12, S. 617 ff.).

Die erfindungsgemäße Verwendung in Mitteldestillat-Kraftstoffen aus fossilem, pflanzlichem oder tierischem Ursprung, die im wesentlichen Kohlenwasserstoffmischungen darstellen, betrifft auch Mischungen aus solchen Mitteldestillaten mit Biobrennstoffölen (Biodiesel). Derartige Mischungen werden von dem Begriff "Mitteldestillat-Kraftstoff" umfasst. Sie sind handelsüblich und enthalten meist die Biobrennstofföle in untergeordneten Mengen, typischerweise in Mengen von 1 bis 30 Gew.-% insbesondere von 3 bis 10 Gew.-%, bezogen auf die Gesamtmenge aus Mitteldestillat fossilen, pflanzlichem oder tierischen Ursprungs und Biobrennstofföl.

Biobrennstofföle basieren in der Regel auf Fettsäureestern, vorzugsweise im wesentlichen auf Alkylester von Fettsäuren, die sich von pflanzlichen und/oder tierischen Ölen und/oder Fetten ableiten. Unter Alkylestern werden üblicherweise Niedrigalkylester, insbesondere C₁- bis C₄-Alkylester, verstanden, die durch Umesterung der in pflanzlichen und/oder tierischen Ölen und/oder Fetten vorkommenden Glyceride, insbesondere Triglyceride, mittels Niedrigalkoholen, beispielsweise Ethanol oder vor allem Methanol ("FAME"), erhältlich sind. Typische Niedrigalkylester auf Basis von pflanzlichen und/oder tierischen Ölen und/oder Fetten, die als Biobrennstofföl oder Komponenten hierfür Verwendung finden, sind beispielsweise Sonnenblumenmethylester, Palmölmethylester ("PME"), Sojaölmethylester ("SME") und insbesondere Rapsölmethylester ("RME").

Besonders bevorzugt handelt es sich bei den Mitteldestillat-Kraftstoffen bzw. Dieselkraftstoffen um solche mit niedrigem Schwefelgehalt, das heißt mit einem Schwefelgehalt von weniger als 0,05 Gew.-%, vorzugsweise von weniger als 0,02 Gew.-%, insbesondere von weniger als 0,005 Gew.-% und speziell von weniger als 0,001 Gew.-% Schwefel.

Als Ottokraftstoffe kommen alle handelsüblichen Ottokraftstoffzusammensetzungen in Betracht. Als typischer Vertreter soll hier der marktübliche Eurosuper Grundkraftstoff gemäß EN 228 genannt werden. Weiterhin sind auch Ottokraftstoffzusammensetzungen der Spezifikation gemäß WO 00/47698 mögliche Einsatzgebiete für die vorliegende Erfindung.

Die nachfolgenden Beispiele sollen die vorliegende Erfindung erläutern, ohne sie zu beschränken.

### Beispiele

### GPC-Analytik

Wenn nicht anders angegeben wurde das massenmittlere Mw und zahlenmittlere Molekulargewicht Mn der Polymere mittels Gel-Permeations-Chromatographie gemessen (GPC). GPC-Trennung erfolgte über zwei PLge Mixed B-Säulen (Agilent) in Tetrahydrofuran bei 35 °C. Die Kalibrierung erfolgte mittels eines engverteilten Polystyrolstandards (Firma PSS, Deutschland) mit Molekulargewicht 162-50400 Da. Hexylbenzol wurde als Marker für niedriges Molekulargewicht verwendet.

### Herstellungsbeispiele

### Allgemeine Arbeitsvorschrift

In einem Reaktor mit Ankerrührer wurde das Olefin oder die Mischung aus Olefinen mit oder ohne Lösungsmittel (als Massepolymerisation) vorgelegt. Die Mischung wurde unter einem Stickstoffstrom und unter Rühren auf die angegebene Temperatur erhitzt. Hierzu gab man den angegebenen Radikalstarter (optional im gleichen Lösungsmittel verdünnt) und geschmolzenes Maleinsäureanhydrid (1 Äquivalent bezogen auf Olefinmonomer). Der Reaktionsansatz wurde bei gleicher Temperatur für die angegebene Reaktionszeit gerührt und dann abgekühlt. Anschließend wurde Wasser zugegeben (wenn nicht anders angegeben 0,9 Äquivalente bezogen auf Maleinsäureanhydrid) und entweder bei 95°C, 10-14 h oder unter Druck bei 110°C 3 h gerührt.

### Synthesebeispiel 1

In einem 2 L Glasreaktor mit Ankerrührer wurden eine Mischung aus C₂₀-C₂₄ Olefinen (363,2 g, Durchschnittmolmasse 296 g/mol) und Solvesso 150 (231,5 g, DHC Solvent Chemie GmbH, Speldorf) vorgelegt. Die Mischung wurde im Stickstoffstrom und unter Rühren auf 160 °C erhitzt. Hierzu gab man innerhalb 5 h eine Lösung von di-tertButylperoxid (29,6 g, Fa. Akzo Nobel) in Solvesso 150 (260,5 g) und geschmolzenes Maleinsäureanhydrid (120,3 g). Der Reaktionsansatz wurde 1 h bei 160 °C gerührt und dann auf 95 °C abgekühlt. Bei dieser Temperatur wurde Wasser (19,9 g) innerhalb 3 h zugegeben und anschliessend 11 h weiter gerührt.

Das GPC (in THF) ergab für das Copolymer ein Mn = 1210 g/mol, Mw = 2330 g/mol, was einer Dispersität von 1,9 entspricht.

### Synthesebeispiel 2

In einem 6 L Metallreaktor mit Ankerrührer wurden eine Mischung aus C₂₀-C₂₄ Olefinen (1743 g, Durchschnittmolmasse 296 g/mol) und Solvesso 150 (1297 g, DHC Solvent Chemie GmbH, Speldorf) vorgelegt. Die Mischung wurde im Stickstoffstrom und unter Rühren auf 150 °C erhitzt. Hierzu gab man innerhalb 5 h eine Lösung von di-tertButylperoxid (118,4g, Fa. Akzo Nobel) in Solvesso 150 (1041 g) und geschmolzenes Maleinsäureanhydrid (577 g). Der Reaktionsansatz wurde 1 h bei 150 °C gerührt und dann auf 110 °C abgekühlt. Bei dieser Temperatur wurde unter Druckaufbau Wasser (95 g) zugegeben und anschliessend 3 h weiter gerührt.

Das GPC (in THF) ergab für das Copolymer ein Mn = 1420 g/mol, Mw = 2500 g/mol, was einer Dispersität von 1,8 entspricht.

### Synthesebeispiel 3

In einem 6 L Metallreaktor mit Ankerrührer wurden eine Mischung aus C₂₀-C₂₄ Olefinen (1743 g, Durchschnittmolmasse 296 g/mol) und Solvesso 150 (1297 g, DHC Solvent Chemie GmbH, Speldorf) vorgelegt. Die Mischung wurde im Stickstoffstrom und unter Rühren auf 150 °C erhitzt. Hierzu gab man innerhalb 5 h eine Lösung von di-tertButylperoxid (23,7 g, Fa. Akzo Nobel) in Solvesso 150 (912 g) und geschmolzenes Maleinsäureanhydrid (577 g). Der Reaktionsansatz wurde 1 h bei 150 °C gerührt und dann auf 110 °C abgekühlt. Bei dieser Temperatur wurde unter Druckaufbau Wasser (95 g) zugegeben und anschliessend 3 h weiter gerührt.

Das GPC (in THF) ergab für das Copolymer ein Mn = 1500 g/mol, Mw = 3200 g/mol, was einer Dispersität von 2,1 entspricht.

### Anwendungsbeispiele

Aus den obigen Synthesebeispielen wurden durch Vermischen mit Polyisobutenamin (Molmasse 1000), Polypropylenglykol als Trägeröl und Lösungsmittel und Dehazer die in Tabelle 2 angegebenen Additivformulierungen hergestellt und in die Anwendungsbeispiele eingesetzt (Zusammensetzungen in Gewichtsteilen).

### 1) Calciumverträglichkeitstest:

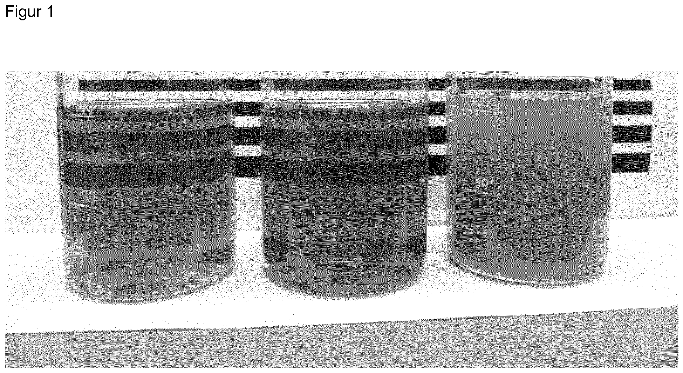

100 ml Motorenöl (Shell Helix®, Figur 1, Becherglas ganz links, mit einem Ca-Gehalt von 1500 ppm, Mg-Gehalt 1100 ppm und Zn-Gehalt 1300 ppm) wurden im Becherglas auf 70°C erhitzt und anschließend 1 ml Korrosionsinhibitor zugesetzt. Sollte die Lösung noch klar sein, gibt man weitere 1 ml Inhibitor zu. Wenn sich die Lösung trübt, gilt der Test als nicht bestanden (z.B. Figur 1, rechtes Becherglas). Figur 1 zeigt das mit Copolymer gemäß Synthesebeispiel 1 (50%ig in Solvent Naphtha) versetzte, klar bleibende Öl in der Mitte. Im rechten Becherglas wurde Dimerfettsäure (dimere Ölsäure; CAS: 61788-89-4, 20%ig in Solvent Naphtha) eingesetzt. Man erkennt eine deutlich sichtbare Trübung.

### 2) Stahlkorrosionstest nach ASTM D 665 B

a) Als Kraftstoff wurde handelsüblicher Ottokraftstoff 95 Oktan E0 der Firma Haltermann eingesetzt und mit einem Additivpaket aus Polyisobutenamin und Trägeröl additiviert. Zur Formulierung wurden die in der folgenden Tabelle angegebenen Korrosionsinhibitoren zugesetzt und einem Korrosionstest nach ASTM D 665 B unterworfen.
Als Vergleich wurde Dimerfettsäure (dimere Ölsäure; CAS: 61788-89-4 als Korrosionsinhibitor, 20%ig in Solvent Naphtha) eingesetzt.

| | Korrosionsinhibitor | Aktivgehalt-Korrosionsinhibitor [ppm] | Bewertung nach NACE |
|---|---|---|---|
| Grundwert-Haltermann E0 (ohne Add itivierung) | - | - | D |
| Grundwert-Haltermann E0 (mit Additivierung) | - | - | E |
| Formulierung 1 | Dimerfettsäure | 2 | A |
| Formulierung 2 | Synthesebeispiel 1 | 2,5 | A |
| Formulierung 3 | Synthesebeispiel 1 | 5 | A |

Die Bewertung erfolgte folgendermaßen:

| | |
|---|---|
| A | 100% rostfrei |
| B++ | 0,1 % oder weniger der gesamten Oberfläche verrostet |
| B+ | 0,1 % bis 5% der gesamten Oberfläche verrostet |
| B | 5 % bis 25% der gesamten Oberfläche verrostet |
| C | 25 % bis 50% der gesamten Oberfläche verrostet |
| D | 50 % bis 75% der gesamten Oberfläche verrostet |
| E | 75 % bis 100% der gesamten Oberfläche verrostet |

b) Es wurde ein weiterer Versuch analog a) durchgeführt, jedoch mit einem E0 Ottokraftstoff KS-0001829 CEC DF-12-09.
Die Ergebnisse sind wie folgt:

| | Korrosionsinhibitor | Aktivgehalt-Korrosionsinhibitor [ppm] | Bewertung nach NACE |
|---|---|---|---|
| Grundwert KS-0001829 (ohne Additivierung) | - | - | E |
| Formulierung 13 | Dimerfettsäure | 2 | A |
| Formulierung 14 | Synthesebeispiel 2 | 2 | A |
| Formulierung 1 | Dimerfettsäure | 2 | A |
| Formulierung 7 | Synthesebeispiel 3 | 2 | B+ |
| Formulierung 11 | Dimerfettsäure | 2 | C |

c) Es wurde ein weiterer Versuch analog a) durchgeführt, jedoch mit einem Ottokraftstoff KS-0001858 MIRO 95 OCTANE E10.
Die Ergebnisse sind wie folgt:

| | Korrosionsinhibitor | Aktivgehalt-Korrosionsinhibitor [ppm] | Bewertung nach NACE |
|---|---|---|---|
| Grundwert KS-0001858 (ohne Additivierung) | - | - | E |
| Formulierung 13 | Dimerfettsäure | 2 | B++ |
| Formulierung 14 | Synthesebeispiel 2 | 2 | B+ |
| Formulierung 1 | Dimerfettsäure | 2 | A |
| Formulierung 7 | Synthesebeispiel 3 | 2 | A |
| Formulierung 11 | Dimerfettsäure | 2 | B+ |

d) Der Test wurde durchgeführt gemäß Norm ASTM D665 A (modifiziert) mit distilliertem Wasser und ASTM D665 B (modifiziert) mit künstlichem Meerwasser im Gemisch mit Diesel-Grundkraftstoff nach EN590 B7, ohne Leistungsadditive. Die Modifizierungen bestanden darin, dass die Temperatur 60 °C und die Dauer des Tests 4 Stunden betrug.

| Zusatz | Bewertung im ASTM D665A Test (mit distilliertem Wasser) | Bewertung im ASTM D665B Test (mit künstlichem Meerwasser) |
|---|---|---|
| Keine Zusätze | B | E |
| 140 mg/kg Probe gemäß Herstellungsbeispiel 1 | A | B |

### 3) Kupferkorrosion

### a) In Benzin

Kupfer-Coupons (Maß 49 x 25 x 1,5 mm, mittig gelocht) wurden mit der Schleifmaschine mit der passenden Schleifbürste ohne festen Druck auf beiden Seiten und an allen Kanten vorsichtig geschliffen. Die geschliffenen Coupons wurden mit einem sauberen Tuch mit Xylol und Aceton mehrmals gut abgerieben, dabei wurden Gummihandschuhe verwendet. In eine 250 ml Glasflasche mit Schraubverschluss wurden 200 ml Kraftstoff gefüllt. Der Coupon wurde mit einem Faden befestigt und in das Kraftstoffglas hängend eingebaut. Der Faden wurde zur Fixierung im Schraubgewinde eingeklemmt.

Die Lagerung erfolgte bei Raumtemperatur (23 °C). Nach Ablauf der ersten Lagerzeit (7 Tage) wurde eine Probe entnommen (20-30 ml), die Glasflasche wieder verschlossen und der Metallgehalt mittels Atomabsorptionsspektroskopie ermittelt. Die Lagerung wurde fortgesetzt. Nach mehrfacher Entnahme und Absinken des Flüssigkeitsspiegels wurde darauf geachtet, daß der Kupfer-Coupon vollständig von Kraftstoff überdeckt ist.

Die Ergebnisse sind in Tabelle 1 aufgeführt.

Aus den Ergebnissen der Tabelle 1 ist zu erkennen, daß die eingesetzten erfindungsgemäßen Verbindungen in gleicher Dosierung eine geringere Tendenz zeigen, in Kraftstoffen Kupfer aus benetzten Oberflächen herauszulösen als die als Vergleich eingesetzte Dimerfettsäure.

**Tabelle 1**

| | | | Kraftstoff E0 aus 2)b) | Kraftstoff E0 aus 2)b) | Kraftstoff E0 aus 2)b) | Kraftstoff E10 aus 2)c) | Kraftstoff E10 aus 2)c) | Kraftstoff E10 aus 2)c) |
|---|---|---|---|---|---|---|---|---|
| | | | Dauer [Tage] | Dauer [Tage] | Dauer [Tage] | Dauer [Tage] | Dauer [Tage] | Dauer [Tage] |
| | | | 7 | 14 | 28 | 7 | 14 | 28 |

| | Aktivkomponente | Aktivkomponente | Kupfergehalt | Kupfergehalt | Kupfergehalt | Kupfergehalt | Kupfergehalt | Kupfergehalt |
|---|---|---|---|---|---|---|---|---|
| | | mg/kg | mg/kg | mg/kg | mg/kg | mg/kg | mg/kg | mg/kg |
| Ohne Additivierung | - | - | <0,1 | <0,1 | - | 0,4 | 0,7 | - |
| Formulierung 12 | - | - | 0,1 | 0,2 | - | 0,5 | 0,8 | - |
| Formulierung 1 | Dimerfettsäure | 2,0 | 0,2 | 0,4 | **0,8** | 0,9 | 1,7 | **3** |
| Formulierung 4 | Synthesebeispiel 2 | 2,0 | 0,1 | 0,2 | **0,4** | 0,8 | 1,4 | **2,5** |
| Formulierung 5 | Synthesebeispiel 2 | 4,0 | 0,2 | 0,3 | **0,6** | 1 | 1,7 | **3** |
| Formulierung 6 | Synthesebeispiel 2 | 8,0 | 0,3 | 0,5 | **0,7** | 1,2 | 1,8 | **3** |
| Formulierung 7 | Synthesebeispiel 3 | 2,0 | 0,1 | 0,3 | **0,5** | 0,9 | 1,4 | **2,7** |
| Formulierung 8 | Synthesebeispiel 3 | 4,0 | 0,2 | 0,4 | **0,6** | 1,1 | 1,7 | **3** |
| Formulierung 9 | Synthesebeispiel 3 | 8,0 | 0,3 | 0,5 | **0,8** | 1 | 1,8 | **2,8** |

**Tabelle 2**

| | Polyisobuten Amin | Trägeröl | Dimerfettsäure | Synthesebeispiel 1 (50% in Solvent Naphtha) | Synthesebeispiel 2 (40% in Solvent Naphtha) | Synthesebeispiel 3 (40% in Solvent Naphtha) | Lösungsmittel + Dehazer | Summe |
|---|---|---|---|---|---|---|---|---|
| Formulierung 1 | 248 | 195 | 10 | | | | 47 | 500 |
| Formulierung 2 | 248 | 195 | | 5 | | | 47 | 495 |
| Formulierung 3 | 248 | 195 | | 10 | | | 47 | 500 |
| Formulierung 4 | 248 | 195 | | | 5 | | 47 | 495 |
| Formulierung 5 | 248 | 195 | | | 10 | | 47 | 500 |
| Formulierung 6 | 248 | 195 | | | 20 | | 47 | 510 |
| Formulierung 7 | 248 | 195 | | | | 5 | 47 | 495 |
| Formulierung 8 | | | | | | 10 | 47 | 500 |
| Formulierung 9 | | | | | | 20 | 47 | 510 |
| Formulierung 10 | 248 | 195 | | | 30 | | 47 | 520 |
| Formulierung 11 | 248 | 195 | 5 | | | | 47 | 495 |
| Formulierung 12 | 248 | 195 | | | | | 47 | 490 |
| Formulierung 13 | 259 | 156 | 10 | | | | 596 | 1021 |
| Formulierung 14 | 259 | 156 | | | 5 | | 596 | 1016 |

### b) In Dieselkraftstoff

Zur Untersuchung des Korrosionsverhaltens der Probe aus Synthesebeispiel 1 gegenüber Nichteisenmetallen wurden tests mit Zink- und Kupferdrähten durchgeführt.

Jeweils 80 ml Aral B7 EN590 Kraftstoff wurden in vier Flaschen abgefüllt, von denen zwei mit 140 ppm einer Probe aus Synthesebeispiel 1 versetzt wurden. In jeweils einer Flasche mit bzw. ohne diese Probe wurde entfetteter Kupferdraht einer Länge von 20 cm und eines Durchmessers von 1 mm plaziert. Analog wurde in jeweils einer Flasche mit bzw. ohne diese Probe entfetteter Zinkdraht einer Länge von 20 cm und eines Durchmessers von 1 mm plaziert.

Der Kupfer- bzw- Zinkgehalt des ursprünglichen Kraftstoffs sowie nach 6 Wochen Lagerung bei 40 °C wurde mittels Atom-Emissions-Spektroskopie (ICP/OES) bestimmt.

| | Kraftstoff (Beginn) | Kraftstoff (ohne Zusatz, 6 Wochen 40 °C) | Kraftstoff (140 ppm Zusatz, 6 Wochen 40 °C) |
|---|---|---|---|
| Gehalt Zn [mg/kg] | <1 | <1 | <1 |
| Gehalt Cu [mg/kg] | <1 | 4 | <1 |

Man sieht, daß die erfindungsgemäßen Verbindungen eine korrosionsinhibierende Wirkung auf Nichteisenmetalle, insbesondere auf Kupfer, haben.

### 4) PFI Motorentest DC M111E

Es wurde ein Motorentest über 60 Stunden gemäß CEC F-020-98 mit Kraftstoff MIRO 95 Oktan E10 durchgeführt und die Ablagerungen auf den Einlassventilen (internal valve deposits, IVD) sowie im Verbrennungsraum (total chamber deposits, TCD-Werte) bestimmt.

Es ergaben sich in der keep clean-Fahrweise für den additivierten Kraftstoff ohne Korrosionsinhibitor ein TCD-Wert von 4122 mg, für den additivierten Kraftstoff mit Korrosionsinhibitor (Formulierung 10) hingegen ein TCD-Wert von 3940 mg.

Ferner ergaben sich für den unadditivierten Kraftstoff ein IVD-Wert von 116mg/Ventil und in der keep clean-Fahrweise für den additivierten Kraftstoff ohne Korrosionsinhibitor ein IVD-Wert von 2 mg/Ventil, für den additivierten Kraftstoff mit Korrosionsinhibitor (Formulierung 10) hingegen ein IVD-Wert von 1 mg/Ventil.

### 5) Keep Clean Test im Benzin Direkteinspritzer Motor (DISI)

Es wurde ein kommerziell verfügbarer DISI (direct injection spark ignition) Motor (1,6 Liter Zylinderkapazität) mit einem E10 Ottokraftstoff von MIRO (7 Vol% an Sauerstoff haltigen Komponenten) für 50 Stunden bei einer Drehzahl von 4000 U/min betrieben.

Im ersten Lauf enthielt der Kraftstoff keine Additive. Der FR-Wert pendelte zwischen 0 und -1.

Im zweiten Lauf enthielt der Kraftstoff 520 mg/kg Formulierung 10. Der FR-Wert pendelte zwischen -2 und -3.

In beiden Läufen wurde der FR-Wert bestimmt. FR ist ein Parameter, der durch die Motorsteuerung generiert wird entsprechend der Kraftstoffeinspritzung in den Verbrennungsraum. Die Bildung von Ablagerungen zeigt sich durch ansteigenden FR-Wert während eines Laufes. Je mehr er anwächst, umso mehr Ablagerungen haben sich gebildet. Bleibt der FR Wert konstant oder nimmt ab, bleibt auch die Injektordüse sauber. In beiden Läufen steigt der FR-Wert nicht an, was darauf hindeutet, dass das beanspruchte Copolymer keinen negativen Einfluss auf die Injektorensauberkeit hat.

## Patentansprüche

1. Verwendung von Copolymeren, erhältlich durch
- in einem ersten Reaktionsschritt (I) Copolymerisation von
(A)mindestens einer ethylenisch ungesättigten Mono- oder Dicarbonsäure oder deren Derivate, ausgewählt aus der Gruppe bestehend aus
- Anhydriden in monomerer oder polymerer Form,
- Mono- oder Dialkylestern, sowie
- gemischten Estern,
(B)mindestens einem α-Olefin mit von mindestens 16 bis zu einschließlich 26 Kohlenstoffatomen,
(C)optional mindestens einem weiteren, mindestens 4 Kohlenstoffatome aufweisenden, aliphatischen oder cycloaliphatischen Olefin, das ein anderes als (B) ist und
(D)optional eines oder mehrerer weiterer copolymerisierbarer Monomere, die verschieden von den Monomeren (A), (B) und (C) sind, ausgewählt aus der Gruppe bestehend aus
(Da) Vinylestern,
(Db) Vinylethern,
(Dc) (Meth)acrylsäureestern von Alkoholen, die mindestens 5 Kohlenstoffatome aufweisen,
(Dd) Allylalkoholen oder deren Ether,
(De) N-Vinylverbindungen, ausgewählt aus der Gruppe bestehend aus Vinylverbindungen von mindestens ein Stickstoffatom enthaltenden Heterocyclen, N-Vinylamide oder N-Vinyllactame,
(Df) ethylenisch ungesättigte Aromaten
(Dg) α,β-ethylenisch ungesättigte Nitrilen,
(Dh) (Meth)acrylsäureamiden und
(Di) Allylaminen,
gefolgt von
- in einem zweiten optionalen Reaktionsschritt (II) teilweise oder vollständige Hydrolyse von im aus (I) erhaltenen Copolymer enthaltenen Anhydrid- oder Carbonsäureesterfunktionalitäten unter Erhalt eines Copolymeren mit einem gewichtsmittleren Molekulargewicht Mw (bestimmt durch Gelpermeationschromatographie mit Tetrahydrofuran und Polystyrol als Standard) von 1,5 bis 4 kDa, wobei der zweite Reaktionsschritt zumindest dann durchlaufen wird, wenn das aus Reaktionsschritt (I) erhaltene Copolymer keine freien Carbonsäurefunktionalitäten enthält,
als Korrosionsinhibitoren in Diesel- oder Ottokraftstoffen, die einen Gehalt an Alkali- und/oder Erdalkalimetallen und/oder Zink von mindestens 0,1 Gew.ppm aufweisen.

2. Verwendung gemäß Anspruch 1, **dadurch gekennzeichnet, daß** die Alkali- und/oder Erdalkalimetalle und/oder Zink ausgewählt aus der Gruppe bestehend aus Natrium, Zink, Magnesium und Calcium.

3. Verwendung gemäß einem der vorstehenden Ansprüche, **dadurch gekennzeichnet, daß** Monomer (A) ausgewählt ist aus der Gruppe bestehend aus Acrylsäure, Methacrylsäure, Acrylsäuremethylester, Acrylsäureethylester, Acrylsäure-n-butylester und Methacrylsäuremethylester und Maleinsäureanhydrid.

4. Verwendung gemäß einem der Ansprüche 1 oder 2, **dadurch gekennzeichnet, daß** es sich bei dem Monomer (A) um eine Dicarbonsäure oder deren Derivate, ausgewählt aus der Gruppe bestehend aus
- Anhydriden in monomerer oder polymerer Form,
- Mono- oder Dialkylestern, sowie
- gemischten Estern
handelt.

5. Verwendung gemäß einem der vorstehenden Ansprüche, **dadurch gekennzeichnet, daß** es sich bei Monomer (B) um ein α-Olefin mit mindestens 18 bis einschließlich 26 Kohlenstoffatomen handelt.

6. Verwendung gemäß einem der vorstehenden Ansprüche, **dadurch gekennzeichnet, daß** es sich bei Olefin (C) um ein mehr als 30 Kohlenstoffatome aufweisendes Polymer von Propen, 1-Buten, 2-Buten oder iso-Buten oder solche enthaltende Olefingemische mit einem gewichtsmittleren Molekulargewicht M_{w} im Bereich von 500 bis 5000 g/mol handelt.

7. Verwendung gemäß einem der Ansprüche 1 bis 5, **dadurch gekennzeichnet, daß** es sich bei Olefin (C) um ein mehr als 30 Kohlenstoffatome aufweisendes Polymer von iso-Buten oder solches enthaltende Olefingemische mit einem gewichtsmittleren Molekulargewicht M_{w} im Bereich von 500 bis 5000 g/mol handelt.

8. Verwendung gemäß einem der vorstehenden Ansprüche, **dadurch gekennzeichnet, daß** Stoffgemisch der Olefine (B) und (C) gemittelt auf ihre Stoffmengen mindestens 12 Kohlenstoffatome aufweist.

9. Verwendung gemäß einem der vorstehenden Ansprüche, **dadurch gekennzeichnet, daß** Monomere (D) ausgewählt ist aus der Gruppe bestehend aus (Da), (Db), (Dc), (De) und (Df).

10. Verwendung gemäß einem der vorstehenden Ansprüche, **dadurch gekennzeichnet, daß** das molare Verhältnis von (A) / ((B) und (C)) (in Summe) von 10:1 bis 1:10 beträgt.

11. Verwendung gemäß Anspruch 8, **dadurch gekennzeichnet, daß** molare Verhältnis von Monomer (B) zum Monomer (C) von 1 : 0,05 bis 10 beträgt.

12. Verwendung gemäß Anspruch 8 oder 9, **dadurch gekennzeichnet, daß** der Anteil an einem oder mehreren der Monomere (D) bezogen auf die Menge der Monomere (A), (B) sowie optional (C) (in Summe) 5 bis 200 mol% beträgt.

13. Verwendung gemäß einem der vorstehenden Ansprüche zur Inhibierung der Korrosion von Eisen-, Stahl- und/oder Buntmetalloberflächen.

14. Verwendung gemäß einem der Ansprüche 1 bis 12 zur Inhibierung der Korrosion von Kupfer und kupferhaltigen Legierungen.

## Claims

1. The use of copolymers obtainable by
- in a first reaction step (I) copolymerizing
(A) at least one ethylenically unsaturated mono- or dicarboxylic acid or derivatives thereof, selected from the group consisting of
- anhydrides in monomeric or polymeric form,
- mono- or dialkyl esters, and
- mixed esters,
(B) at least one α-olefin having from at least 16 up to and including 28 carbon atoms,
(C)optionally at least one further aliphatic or cycloaliphatic olefin which has at least 4 carbon atoms and is different than (B) and
(D)optionally one or more further copolymerizable monomers other than monomers (A), (B) and (C), selected from the group consisting of
(Da) vinyl esters,
(Db) vinyl ethers,
(Dc) (meth)acrylic esters of alcohols having at least 5 carbon atoms,
(Dd) allyl alcohols or ethers thereof,
(De) N-vinyl compounds selected from the group consisting of vinyl compounds of heterocycles containing at least one nitrogen atom, N-vinylamides or N-vinyllactams,
(Df) ethylenically unsaturated aromatics,
(Dg) α,β-ethylenically unsaturated nitriles,
(Dh) (meth)acrylamides and
(Di) allylamines,
followed by
- in a second optional reaction step (II) partly or fully hydrolyzing anhydride or carboxylic ester functionalities present in the copolymer obtained from (I) to obtain a copolymer having a weight-average molecular weight Mw (determined by gel permeation chromatography with tetrahydrofuran and polystyrene as standard) of 1.5 to 4 kDa, the second reaction step being run at least when the copolymer obtained from reaction step (I) does not comprise any free carboxylic functionalities,
as corrosion inhibitors in diesel fuels or gasoline fuels having a content of alkali metals and/or alkaline earth metals and/or zinc of at least 0.1 ppm by weight.

2. The use according to claim 1, wherein the alkali metals and/or alkaline earth metals and/or zinc are selected from the group consisting of sodium, zinc, magnesium and calcium.

3. The use according to either of the preceding claims, wherein monomer (A) is selected from the group consisting of acrylic acid, methacrylic acid, methyl acrylate, ethyl acrylate, n-butyl acrylate and methyl methacrylate and maleic anhydride.

4. The use according to either of claims 1 and 2, wherein monomer (A) is a dicarboxylic acid or derivatives thereof, selected from the group consisting of
- anhydrides in monomeric or polymeric form,
- mono- or dialkyl esters, and
- mixed esters.

5. The use according to any of the preceding claims, wherein monomer (B) is an α-olefin having at least 18 up to and including 26 carbon atoms.

6. The use according to any of the preceding claims, wherein olefin (C) is a polymer having more than 30 carbon atoms of propene, 1-butene, 2-butene or isobutene or olefin mixtures comprising the latter, having a weight-average molecular weight M_{w} in the range from 500 to 5000 g/mol.

7. The use according to any of claims 1 to 5, wherein olefin (C) is a polymer of isobutene or olefin mixtures comprising the latter, having more than 30 carbon atoms and having a weight-average molecular weight M_{w} in the range from 500 to 5000 g/mol.

8. The use according to any of the preceding claims, wherein mixture of the olefins (B) and (C) averaged to the molar amounts thereof has at least 12 carbon atoms.

9. The use according to any of the preceding claims, wherein monomer (D) is selected from the group consisting of (Da), (Db), (Dc), (De) and (Df).

10. The use according to any of the preceding claims, wherein the molar ratio of (A) / ((B) and (C)) (in total) is from 10:1 to 1:10.

11. The use according to claim 8, wherein the molar ratio of monomer (B) to monomer (C) is from 1:0.05 to 10.

12. The use according to claim 8 or 9, wherein the proportion of one or more of the monomers (D), based on the amount of the monomers (A), (B) and optionally (C) (in total), is 5 to 200 mol%.

13. The use according to any of the preceding claims for inhibition of corrosion of iron surfaces, steel surfaces and/or nonferrous metal surfaces.

14. The use according to any of claims 1 to 12 for inhibition of corrosion of copper and copper-containing alloys.

## Revendications

1. Utilisation de copolymères, pouvant être obtenus par :
- lors d'une première étape de réaction (I), la copolymérisation de :
(A) au moins un acide mono- ou dicarboxylique éthyléniquement insaturé ou ses dérivés, choisis dans le groupe constitué par :
- les anhydrides sous forme monomère ou polymère,
- les esters mono- ou dialkyliques, et
- les esters mixtes,
(B) au moins une α-oléfine contenant au moins 16 à 26, inclus, atomes de carbone,
(C) éventuellement au moins une oléfine aliphatique ou cycloaliphatique supplémentaire, comprenant au moins 4 atomes de carbone, qui est différente de (B), et
(D) éventuellement un ou plusieurs monomères copolymérisables supplémentaires, qui sont différents des monomères (A), (B) et (C), choisis dans le groupe constitué par :
(Da) les esters de vinyle,
(Db) les éthers de vinyle,
(Dc) les esters de l'acide (méth)acrylique d'alcools, qui comprennent au moins 5 atomes de carbone,
(Dd) les alcools allyliques ou leurs éthers,
(De) les composés de N-vinyle, choisis dans le groupe constitué par les composés de vinyle d'hétérocycles contenant au moins un atome d'azote, les N-vinylamides ou les N-vinyllactames,
(Df) les composés aromatiques éthyléniquement insaturés,
(Dg) les nitriles α,β-éthyléniquement insaturés,
(Dh) les amides de l'acide (méth)acrylique et
(Di) les allylamines,
suivie par
- lors d'une deuxième étape de réaction optionnelle (II), l'hydrolyse partielle ou totale des fonctionnalités anhydride ou ester d'acide carboxylique contenues dans le copolymère obtenu en (I) pour obtenir un copolymère ayant un poids moléculaire moyen en poids Mw (déterminé par chromatographie par perméation de gel avec du tétrahydrofurane et du polystyrène en tant qu'étalons) de 1,5 à 4 kDa, la deuxième étape de réaction étant réalisée au moins lorsque le copolymère obtenu à l'étape de réaction (I) ne contient pas de fonctionnalité acide carboxylique libre,
en tant qu'inhibiteurs de corrosion dans des carburants diesel ou automobiles, qui présentent une teneur en métaux alcalins et/ou alcalino-terreux et/ou en zinc d'au moins 0,1 ppm en poids.

2. Utilisation selon la revendication 1, **caractérisée en ce que** les métaux alcalins et/ou alcalino-terreux et/ou le zinc sont choisis dans le groupe constitué par le sodium, le zinc, le magnésium et le calcium.

3. Utilisation selon l'une quelconque des revendications précédentes, **caractérisée en ce que** le monomère (A) est choisi dans le groupe constitué par l'acide acrylique, l'acide méthacrylique, l'ester méthylique de l'acide acrylique, l'ester éthylique de l'acide acrylique, l'ester n-butylique de l'acide acrylique et l'ester méthylique de l'acide méthacrylique et l'anhydride de l'acide maléique.

4. Utilisation selon l'une quelconque des revendications 1 ou 2, **caractérisée en ce que** le monomère (A) consiste en un acide dicarboxylique ou ses dérivés, choisis dans le groupe constitué par :
- les anhydrides sous forme monomère ou polymère,
- les esters mono- ou dialkyliques, et
- les esters mixtes.

5. Utilisation selon l'une quelconque des revendications précédentes, **caractérisée en ce que** le monomère (B) consiste en une α-oléfine contenant au moins 18 à 26, inclus, atomes de carbone.

6. Utilisation selon l'une quelconque des revendications précédentes, **caractérisée en ce que** l'oléfine (C) consiste en un polymère de propène, de 1-butène, de 2-butène ou d'iso-butène comprenant plus de 30 atomes de carbone ou en des mélanges d'oléfines contenant un tel polymère, ayant un poids moléculaire moyen M_{w} dans la plage allant de 500 à 5 000 g/mol.

7. Utilisation selon l'une quelconque des revendications 1 à 5, **caractérisée en ce que** l'oléfine (C) consiste en un polymère d'iso-butène comprenant plus de 30 atomes de carbone ou en des mélanges d'oléfines contenant un tel polymère, ayant un poids moléculaire moyen en poids M_{w} dans la plage allant de 500 à 5 000 g/mol.

8. Utilisation selon l'une quelconque des revendications précédentes, **caractérisée en ce que** le mélange de matières des oléfines (B) et (C) comprend au moins 12 atomes de carbone, moyenné sur leurs quantités de matières.

9. Utilisation selon l'une quelconque des revendications précédentes, **caractérisée en ce que** le monomère (D) est choisi dans le groupe constitué par (Da), (Db), (Dc), (De) et (Df).

10. Utilisation selon l'une quelconque des revendications précédentes, **caractérisée en ce que** le rapport molaire de (A)/((B) et (C)) (au total) est de 10:1 à 1:10.

11. Utilisation selon la revendication 8, **caractérisée en ce que** le rapport molaire entre le monomère (B) et le monomère (C) est de 1:0,05 à 10.

12. Utilisation selon la revendication 8 ou 9, **caractérisée en ce que** la proportion d'un ou de plusieurs des monomères (D), par rapport à la quantité des monomères (A), (B) et éventuellement (C) (au total) est de 5 à 200 % en moles.

13. Utilisation selon l'une quelconque des revendications précédentes, pour l'inhibition de la corrosion de surfaces en fer, en acier et/ou en métal non ferreux.

14. Utilisation selon l'une quelconque des revendications 1 à 12 pour l'inhibition de la corrosion de cuivre et d'alliages contenant du cuivre.
